# EUROPEAN PATENT SPECIFICATION

(11) **EP 4 040 750 B1**
(45) Date of publication and mention of the grant of the patent: **27.11.2024**
(21) Application number: 20878800.0
(22) Date of filing: 23.09.2020
(51) Int. Cl.: H04L 9/40, H04L 9/16, H04L 9/08

(54) **SECURE COMMUNICATION METHOD AND APPARATUS**
VERFAHREN UND VORRICHTUNG FÜR SICHERE KOMMUNIKATION
PROCÉDÉ ET APPAREIL DE COMMUNICATION SÉCURISÉE

(30) Priority: 25.10.2019 CN 201911024404; 07.11.2019 CN 201911083768
(43) Date of publication of application: 10.08.2022
(73) Proprietor: Huawei Technologies Co., Ltd., Shenzhen, Guangdong 518129 (CN)
(72) Inventor: PAN, Wei, Shenzhen, Guangdong 518129 (CN); FANG, Yonglong, Shenzhen, Guangdong 518129 (CN); XIA, Liang, Shenzhen, Guangdong 518129 (CN); WU, Bo, Shenzhen, Guangdong 518129 (CN)
(74) Representative: Isarpatent
(86) International application number: PCT/CN2020/116952
(87) International publication number: WO 2021/077968

(56) References cited:
- CN-A- 1 985 455
- CN-A- 101 309 273
- CN-A- 102 347 870
- US-A1- 2012 008 778
- US-A1- 2014 245 002
- US-A1- 2018 139 191
- US-A1- 2019 068 558
- US-B1- 6 907 123
- US-B1- 7 499 545
- US-B1- 7 499 545

## Description

### TECHNICAL FIELD

Embodiments of this application relate to the field of security technologies, and in particular, to a secure communication method, apparatus, and system.

### BACKGROUND

When a packet is to be transmitted between network devices, to ensure security of packet transmission, a sender network device may encrypt the to-be-sent packet by using an encryption technology (for example, internet protocol security (Internet Protocol Security, IPSec)). Before encrypting the to-be-sent packet, the network devices need to negotiate parameters such as an encryption algorithm and a key exchange method to determine an encryption policy.

A method for transmitting signaling information over a data transport network is known from US 2012/008778 A1. US 2018/139191 A1 relates to encryption and decryption technologies in a process of processing a virtual extensible local area network (VXLAN) packet. US 2019/068558 A1 discloses methods for encrypting and decrypting a message using multiple keys. US 2014/245002 A1 relates to secure data transmissions. US 6 907 123 B1 discloses a secure voice communication system.

After the encryption policy is determined, the network device may usually encrypt the packet by using the determined encryption policy. An attacker may actively construct a packet, encrypt the packet, observe an encrypted packet, and obtain a rule through analyzing, to accelerate cracking of the encryption policy. In addition, once the attacker masters a cracking rule, the attacker can quickly crack the encryption policy even if a session key for encrypting the encryption policy is updated. Once the encryption policy is cracked by the attacker, security of other packets subsequently transmitted by the sender network device and a receiver network device by using the encryption policy is reduced. Therefore, how to further improve the security of packet transmission is an urgent technical problem to be resolved currently.

### SUMMARY

The invention relates to secure communication methods and network devices as recited in the independent claims. Advantageous embodiments are set out in the dependent claims. Embodiments of this application provide a secure communication method, apparatus, and system, to encrypt different packets in same traffic by using different encryption policies, thereby increasing a difficulty of cracking by an attacker and improving communication security.

To achieve the foregoing objective, this application uses the following technical solutions.

According to a first aspect, an embodiment of this application provides a secure communication method. The method includes: A first network device receives a first packet and a second packet that belong to first traffic, where all packets included in the first traffic match a first traffic differentiation rule. Based on a mapping relationship between the first traffic and a first encryption policy group, the first network device encrypts the first packet by using a first encryption policy to obtain a third packet, and the first network device encrypts the second packet by using a second encryption policy to obtain a fourth packet. The first encryption policy group includes the second encryption policy and the first encryption policy, and the first encryption policy and the second encryption policy are different encryption policies. The first network device sends the third packet and the fourth packet to a second network device.

Because there is a mapping relationship between the first traffic and the first encryption policy group, the first network device may encrypt different packets in the first traffic by using different encryption policies in the first encryption policy group, for example, encrypt the first packet in the first traffic by using the first encryption policy, and encrypt the second packet in the first traffic by using the second encryption policy. In this way, different packets in same traffic may be encrypted by using different encryption policies, thereby increasing a difficulty of cracking by an attacker and improving communication security.

In this application, the first encryption policy specifies a first session key and a first encryption algorithm that are used for encrypting the first packet, and the second encryption policy specifies a second session key and a second encryption algorithm that are used for encrypting the second packet. That the first encryption policy is different from the second encryption policy may be that the first encryption algorithm is different from the second encryption algorithm, or the first session key is different from the second session key. When the first session key is different from the second session key, the first encryption algorithm and the second encryption algorithm may be the same or may be different. When the first encryption algorithm is different from the second encryption algorithm, the first session key and the second session key may be the same or may be different.

In this application, that the first network device encrypts a packet by using an encryption policy, and sends an encrypted packet may also be understood as that the first network device sends the packet through an encrypted connection. The encrypted connection is a connection for encrypting the packet by using the encryption policy. For example, that the first network device encrypts the first packet by using the first encryption policy to obtain the third packet, and sends the third packet to the second network device may also be understood as: The first network device sends the first packet through a first encrypted connection, where the first encrypted connection is a connection for encrypting the first packet by using the first encryption policy. Similarly, that the first network device encrypts the second packet by using the second encryption policy to obtain the fourth packet, and sends the fourth packet to the second network device may be understood as: The first network device sends the second packet through a second encrypted connection, where the second encrypted connection is a connection for encrypting the second packet by using the second encryption policy.

A mapping relationship between traffic and an encryption policy group may also be understood as a mapping relationship between a traffic differentiation rule matching the traffic and the encryption policy group, or may be understood as a mapping relationship between the traffic and a plurality of encrypted connections. The foregoing statements essentially express the same meaning in terms of technology. For example, the mapping relationship between the first traffic and the first encryption policy group may be understood as a mapping relationship between the first traffic differentiation rule and the first encryption policy group, or may be understood as a mapping relationship between the first traffic (or the first traffic differentiation rule) and a first encrypted connection group. The first encrypted connection group includes a plurality of different encrypted connections. The plurality of different encrypted connections encrypt packets by using different encryption policies.

That the first network device encrypts the first packet by using the first encryption policy to obtain the third packet is specifically: The first network device generates a first session key according to a key exchange method corresponding to the first encryption policy, and encrypts the first packet based on the first session key and an encryption algorithm corresponding to the first encryption policy to obtain the third packet. A person skilled in the art may understand the foregoing technical meaning. Similarly, that the first network device encrypts the second packet by using the second encryption policy to obtain the fourth packet is specifically: The first network device generates a second session key according to a key exchange method corresponding to the second encryption policy, and encrypts the second packet based on the second session key and an encryption algorithm corresponding to the second encryption policy to obtain the fourth packet. As described in this embodiment of this application, the key exchange methods and/or encryption algorithms corresponding to the first encryption policy and the second encryption policy may be the same or may be different. Details are not described herein.

Optionally, the third packet carries a first encryption policy identifier, and the first encryption policy identifier indicates that the third packet is a packet encrypted by using the first encryption policy.

Optionally, the fourth packet carries a second encryption policy identifier, and the second encryption policy identifier indicates that the fourth packet is a packet encrypted by using the second encryption policy.

Optionally, each encryption policy in the first encryption policy group specifies an encryption algorithm and a key exchange method that are required for encrypting a packet.

In a possible design, the method provided in this embodiment of this application further includes: The first network device determines an encryption policy corresponding to each packet in the received first traffic in one of the following manners: Manner 1: The first network device sequentially selects an encryption policy from the first encryption policy group in a sequence of encryption policies in the first encryption policy group, and encrypts each packet in the received first traffic. Manner 2: The first network device randomly selects an encryption policy from the first encryption policy group, and encrypts each packet in the received first traffic. Manner 3: The first network device encrypts N packets in the first traffic by using the first encryption policy, and encrypts P packets in the first traffic by using the second encryption policy, where the N packets include the first packet, the P packets include the second packet, and N and P are positive integers. In this way, a manner in which the first network device determines the encryption policy for each packet is more flexible.

That based on the mapping relationship between the first traffic and the first encryption policy group, the first network device encrypts the first packet by using the first encryption policy to obtain the third packet, and encrypts the second packet by using the second encryption policy to obtain the fourth packet includes:

The first network device determines a first encryption priority corresponding to the first packet, and determines, based on an association relationship between the first encryption priority and the first encryption policy, to encrypt the first packet by using the first encryption policy to obtain the third packet.

The first network device determines a second encryption priority corresponding to the second packet, and determines, based on an association relationship between the second encryption priority and the second encryption policy, to encrypt the second packet by using the second encryption policy to obtain the fourth packet.

By setting different encryption priorities, encryption policies with different priorities may be used according to requirements of different packets for security communication levels. Therefore, a packet having a requirement for a high security level is encrypted by using an encryption policy with a high priority, so that a secure communication requirement can be satisfied. A packet having a requirement for a low security level is encrypted by using an encryption policy with a low priority. In this way, overheads of encrypting and decrypting packets can be reduced, and working efficiency of a processor can be improved.

In a possible design, an encryption priority of the first encryption policy is higher than an encryption priority of the second encryption policy.

In a possible design, the first packet includes a first encryption priority identifier, and the first encryption priority identifier is used to indicate the first encryption priority; and the second packet includes a second encryption priority identifier, and the second encryption priority identifier is used to indicate the second encryption priority. In a possible design, that the first network device sends the third packet and the fourth packet to a second network device includes: The first network device sends the third packet to the second network device through a first path, and sends the fourth packet to the second network device through a second path, where the first path is associated with the first encryption policy, and the second path is associated with the second encryption policy. That the first path is associated with the first encryption policy may also be understood as that the first path is a path that uses the first encrypted connection. That the second path is associated with the second encryption policy may also be understood as that the second path is a path that uses the second encrypted connection.

The method further includes: The first network device obtains a plurality of second public keys of the second network device. The first network device obtains policy information associated with each of the plurality of second public keys, where the policy information includes key exchange method information and encryption algorithm information. The first network device creates the first encryption policy group based on the plurality of second public keys and the policy information associated with each of the plurality of second public keys. The key exchange method information is used to indicate a key exchange method, and the encryption algorithm information is used to indicate an encryption algorithm. The key exchange method information and the encryption algorithm information, for example, may indicate a corresponding key exchange method and encryption algorithm in a bit mapping manner in a corresponding field of a packet, or may indicate a corresponding key exchange method and encryption algorithm by using a binary value in a corresponding field of a packet. Alternatively, the key exchange method information and the encryption algorithm information may be information such as corresponding character strings and identifiers IDs. This is not specifically limited in this application.

In a possible design, that the first network device obtains a plurality of second public keys of the second network device includes: The first network device obtains the plurality of second public keys by using a third network device. The third network device may be, for example, a controller, a network management system, or a route reflector.

In a possible design, that the first network device obtains policy information associated with each of the plurality of second public keys includes: The first network device locally obtains the policy information associated with each second public key; or the first network device receives, by using the third network device, the policy information associated with each second public key.

In a possible design, that the first network device obtains a plurality of second public keys of the second network device and that the first network device obtains policy information associated with each of the plurality of second public keys include: The first network device obtains at least one first public key group and policy information associated with each of the at least one first public key group, where the at least one first public key group includes the plurality of second public keys.

In a possible design, that the first network device creates the first encryption policy group based on the plurality of second public keys and the policy information associated with each second public key includes: The first network device determines n1 public-private key pairs associated with first policy information, where the first policy information includes a first key exchange method and a first encryption algorithm. The first network device determines n2 public keys that are in the plurality of second public keys and that are associated with the first policy information. The first network device generates the first encryption policy group based on the n1 public-private key pairs of the first network device, the n2 public keys of the second network device, and the first policy information, where the first encryption policy group includes n1×n2 encryption policies, and n1 and n2 are positive integers greater than 1.

In a possible design, that the first network device creates the first encryption policy group based on the plurality of second public keys and the policy information associated with each second public key includes: Policy information associated with a Y^{th} first public-private key pair in the first public-private key pair list is the same as policy information associated with a Y^{th} second public key in the plurality of second public keys, and the first network device generates an encryption policy based on the Y^{th} first public-private key pair and the Y^{th} second public key, where Y is an integer greater than or equal to 1.

In a possible design, the method in this embodiment of this application further includes: The first network device receives second traffic, where the second traffic includes a fifth packet and a sixth packet, and all packets included in the second traffic match a second traffic differentiation rule. Based on a mapping relationship between the second traffic and the first encryption policy group, the first network device encrypts the fifth packet and the sixth packet by using corresponding encryption policies in the first encryption policy group. The first network device sends an encrypted fifth packet and an encrypted sixth packet to the second network device.

According to a second aspect, an embodiment of this application provides a secure communication according to claim 8.

Optionally, the third packet carries a first encryption policy identifier, and the first encryption policy identifier indicates that the third packet is a packet encrypted by using the first encryption policy.

Optionally, the fourth packet carries a second encryption policy identifier, and the second encryption policy identifier indicates that the fourth packet is a packet encrypted by using the second encryption policy.

In a possible design, the second network device determines, based on a first encrypted packet carried in the third packet, to decrypt the third packet by using an encryption policy corresponding to the first encryption policy.

In a possible design, the second network device determines, based on a second encrypted packet carried in the fourth packet, to decrypt the third packet by using an encryption policy corresponding to the first encryption policy.

In a possible design, the method provided in this embodiment of this application further includes: The second network device sends a plurality of second public keys of the second network device to the first network device.

In a possible design, the method provided in this embodiment of this application further includes: The second network device sends the plurality of second public keys of the second network device to the first network device, and sends, to the first network device, policy information associated with each of the plurality of second public keys, where the policy information includes a key exchange method and an encryption algorithm.

In a possible design, the method provided in this embodiment of this application further includes: The second network device sends at least one first public key group and policy information associated with each of the at least one first public key group to the first network device, where the at least one first public key group includes the plurality of second public keys.

According to a third aspect, this application provides a first network device, including a memory and a processor connected to the memory. The memory stores instructions, and the processor reads the instructions, so that the first network device performs the method according to any one of the first aspect and optional designs of the first aspect.

According to a fourth aspect, this application provides a second network device, including a memory and a processor connected to the memory. The memory stores instructions, and the processor reads the instructions, so that the second network device performs the method according to any one of the second aspect and optional designs of second aspect.

### BRIEF DESCRIPTION OF DRAWINGS

FIG. 1 is a system architectural diagram of a communication system according to an embodiment of this application;
FIG. 2 is a schematic diagram of controller-based key agreement according to an embodiment of this application;
FIG. 3 is a schematic flowchart of a traffic sending method according to an embodiment of this application;
FIG. 4 is a schematic flowchart of another traffic sending method according to an embodiment of this application;
FIG. 5 is a schematic flowchart of an encryption policy group negotiation method according to an embodiment of this application;
FIG. 6 is a schematic flowchart of a public key obtaining method according to an embodiment of this application;
FIG. 7 is a schematic flowchart of another public key obtaining method according to an embodiment of this application;
FIG. 8 is a schematic flowchart of an encryption policy generation method according to an embodiment of this application;
FIG. 9 is a schematic flowchart of another encryption policy generation method according to an embodiment of this application;
FIG. 10 is a schematic flowchart of a method for associating traffic with an encryption policy group according to an embodiment of this application;
FIG. 11 is a schematic flowchart of a method for classifying and associating traffic and encryption policies based on algorithm intensity according to an embodiment of this application;
FIG. 12 is a schematic flowchart of a secure communication method according to an embodiment of this application;
FIG. 13 is a schematic diagram of a structure of a network device according to an embodiment of this application;
FIG. 14 is a schematic diagram of a structure of a network device according to an embodiment of this application;
FIG. 15 is a schematic diagram of a structure of a network device according to an embodiment of this application; and
FIG. 16 is a schematic diagram of a structure of a network device according to an embodiment of this application.

### DESCRIPTION OF EMBODIMENTS

To clearly describe the technical solutions in embodiments of this application, ordinal numbers such as "first", "second", "third", "fourth", and "fifth" are used in embodiments of this application to distinguish between same items or similar items that have a basically same function and purpose. For example, a first network device and a second network device are merely intended to distinguish between different network devices, and are not intended to limit a sequence thereof. A person skilled in the art may understand that the terms such as "first" and "second" do not constitute a limitation on a quantity or an execution sequence, and that the terms such as "first" and "second" do not indicate a definite difference.

It should be noted that in this application, the term such as "example" or "for example" is used to represent giving an example, an illustration, or descriptions. Any embodiment or design scheme described as an "example" or "for example" in this application should not be explained as being more preferable or having more advantages than another embodiment or design scheme. Exactly, use of the word such as "example" or "for example" is intended to present a related concept in a specific manner.

In this application, the term "at least one" means one or more, and the term "a plurality of" means two or more. The term "and/or" describes an association relationship between associated objects and represents that three relationships may exist. For example, A and/or B may represent the following cases: Only A exists, both A and B exist, and only B exists, where A and B may be singular or plural. The character "/" usually indicates an "or" relationship between the associated objects. "At least one item (piece) of the following" or a similar expression thereof means any combination of the items, including any combination of singular items (pieces) or plural items (pieces). For example, at least one item (piece) of a, b, or c may indicate: a, b, c, a and b, a and c, b and c, or a, b, and c, where a, b, and c may be singular or plural.

A system architecture and a service scenario that are described in embodiments of this application are intended to describe the technical solutions in embodiments of this application more clearly, but constitute no limitation on the technical solutions provided in embodiments of this application. A person of ordinary skill in the art may learn that the technical solutions provided in embodiments of this application are also applicable to a similar technical problem as a network architecture evolves and a new service scenario emerges. Before embodiments of this application are described, terms used in embodiments of this application are first explained as follows:
(1) Traffic is a set including a plurality of packets that satisfy a same traffic differentiation rule.

In this application, all packets that satisfy a same traffic differentiation rule belong to same traffic. In this application, the traffic may be differentiated based on different dimensions such as an access control list (access control list, ACL), a virtual private network (virtual private network, VPN) and/or an interface, a quintuple, and a flow identifier. For example, a traffic differentiation rule may include but is not limited to one or more of the following rules: matching a same ACL, matching a specified ACL range, belonging to a same VPN, belonging to a specified VPN range, receiving from a same inbound interface, receiving from some interface ranges, sending from a same outbound interface, or sending from some interface ranges.

In a specific implementation, all packets matching a same ACL belong to same traffic, or all packets matching a specified ACL range belong to same traffic. For example, if a packet 1 and a packet 2 match a same ACL, the packet 1 and the packet 2 belong to same traffic. For example, the specified ACL range is an ACL 1 to an ACL 3. If a packet 1 is from the ACL 1 and a packet 2 is from the ACL 3, it may also be considered that the packet 1 and the packet 2 belong to same traffic.

In a specific implementation, all packets belonging to a same VPN or a same VPN instance belong to same traffic. Alternatively, all packets belonging to a specified VPN range belong to same traffic.

In a specific implementation, all packets received or sent through a same interface belong to same traffic, or packets received in some interface ranges (for example, an interface 1 to an interface 5) belong to same traffic, or packets sent in some interface ranges (for example, an interface 3 to an interface 5) belong to same traffic.

The foregoing rules may further be combined to form a traffic differentiation rule. For example, the traffic differentiation rule is that packets belong to a same VPN and are sent through a same outbound interface. Specifically, if the packet 1 and the packet 2 belong to a same VPN, and the packet 1 and the packet 2 are sent through a same interface, the packet 1 and the packet 2 belong to same traffic. If the packet 1 and the packet 2 belong to a same VPN, but the packet 1 and the packet 2 are sent through different interfaces, the packet 1 and the packet 2 do not belong to same traffic.

A person skilled in the art may understand that the traffic differentiation rule described above is merely an example for description, and should not be understood as a limitation on the traffic differentiation rule described in this application. Under existing technical cognition of a person skilled in the art, any traffic differentiation rule may exist, and packets complying with a same traffic differentiation rule belong to same traffic.

(2) A group of traffic is a set of a plurality of pieces of traffic. Different traffic in the plurality of pieces of traffic may have different traffic differentiation rules.

In a possible implementation, in embodiments of this application, a plurality of pieces of traffic in a group of traffic may be associated with a same encryption policy group. For example, a group of traffic includes traffic 1, traffic 2, and traffic 3, and the traffic 1, the traffic 2, and the traffic 3 are all associated with an encryption policy group A. Alternatively, the traffic 1 and the traffic 2 are associated with an encryption policy group A, and the traffic 3 is associated with an encryption policy group B and the encryption policy group A.

In another possible implementation, in embodiments of this application, different traffic in a group of traffic is associated with different encryption policy groups. For example, traffic 1 and traffic 2 are associated with an encryption policy group A, and traffic 3 is associated with an encryption policy group B. When different traffic in a group of traffic is associated with different encryption policy groups, there may be an intersection set between encryption policies included in the different encryption policy groups. For example, the traffic 1 is associated with an encryption policy group 1, and the traffic 2 is associated with an encryption policy group 2. The encryption policy group 1 includes an encryption policy 1, an encryption policy 2, and an encryption policy 3. The encryption policy group 2 includes the encryption policy 1 and the encryption policy 2. An intersection set between the encryption policy group 1 and the encryption policy group 2 includes the encryption policy 1 and the encryption policy 2.

(3) An encryption policy may also be referred to as an encrypted connection policy, a secure connection policy, or a security policy. The encryption policy is used to specify an encryption algorithm and a session key that are used for encrypting a packet. The session key is referred to as a session key in English, and is also often referred to as a dialog key, a conference key, a dialog key, or a session key in Chinese. The session key is a symmetric key used for encryption in a session at a time. All members use a same key to encrypt a plaintext and decrypt a ciphertext.

In a specific implementation, the encryption policy may further specify an authentication algorithm. The authentication algorithm may be, for example, a digital signature algorithm, and is used to authenticate an identity of a sending device.

(4) An encryption policy group is a set including a plurality of encryption policies.

(5) An encrypted connection is a connection for encrypting a transmitted packet by using an encryption algorithm, a session key, and the like. An encryption policy is an attribute of the encrypted connection, for example, the used encryption algorithm or the used session key.

(6) A key exchange method is used to generate a session key. In this application, the key exchange method may be, for example, based on a DH (Diffie-Hellman) key exchange algorithm or an ECDH (Elliptic-curve Diffie-Hellman) key exchange algorithm.

The method provided in embodiments of this application is applicable to the following scenarios.

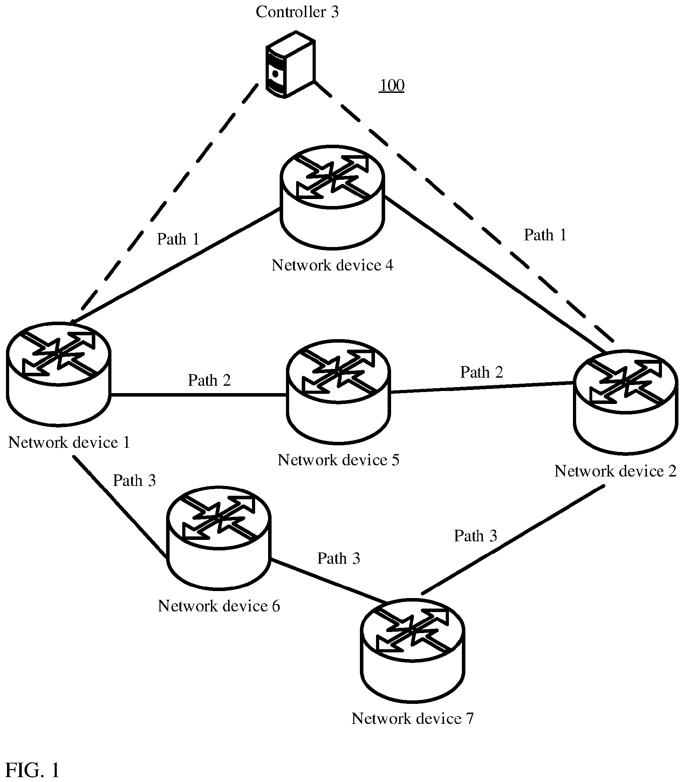

Scenario 1: FIG. 1 is a schematic architectural diagram of a network to which an embodiment of this application is applied. As shown in FIG. 1, the network 100 includes a network device 1, a network device 2, and a controller 3, and the controller 3 communicates with the network device 1 and the network device 2. IPSEC negotiation is performed between the network device 1 and the network device 2 by using the controller.

A communication system shown in FIG. 1 is applicable to a software-defined wide area network (software-defined wide area network, SD-WAN), and is a service formed by applying a software-defined network (software-defined network, SDN) technology to a wide area network scenario. The service is used to connect an enterprise network, a data center, an internet application, and a cloud service in a wide geographical range. A typical feature of the service is that a network control capability is "cloud-based" or virtualized in a software manner, to support network capability openness that can be sensed by an application. The SD-WAN is a simpler and more flexible WAN interconnection solution with better service experience, and may provide on-demand interconnection between branches and between branches and headquarters/data centers in all scenarios.

There are many network devices in the SD-WAN. To ensure traffic security, traffic between the network devices may usually be encrypted by using an encryption technology (for example, internet protocol security (Internet Protocol Security, IPSec)).

In addition, in a specific implementation, as shown in FIG. 1, there may further be one or more paths (for example, a path 1, a path 2, and a path 3) between the network device 1 and the network device 2 in the network 100. Each of the one or more paths includes one or more devices. The one or more devices may be configured to transit a packet between the network device 1 and the network device 2. For example, the path 1 includes a network device 4, and the network device 1 may first send the network device 4 a packet to be sent to the network device 2, so that the network device 4 sends the packet to the network device 2 by using a network device 5. For example, the path 2 includes the network device 5, and the path 3 includes a network device 6 and a network device 7.

Certainly, the packet transmitted between the network device 1 and the network device 2 may alternatively not be forwarded by the intermediate network device. This is not limited in this embodiment of this application. Alternatively, the network 100 may not include the controller, and IPSEC negotiation is directly performed between the network device 1 and the network device 2.

In this application, the network device 1 and the network device 2 each may be a router, a switch, a gateway device, a packet switching device, a terminal device, a base station, or the like. This is not specifically limited in this application.

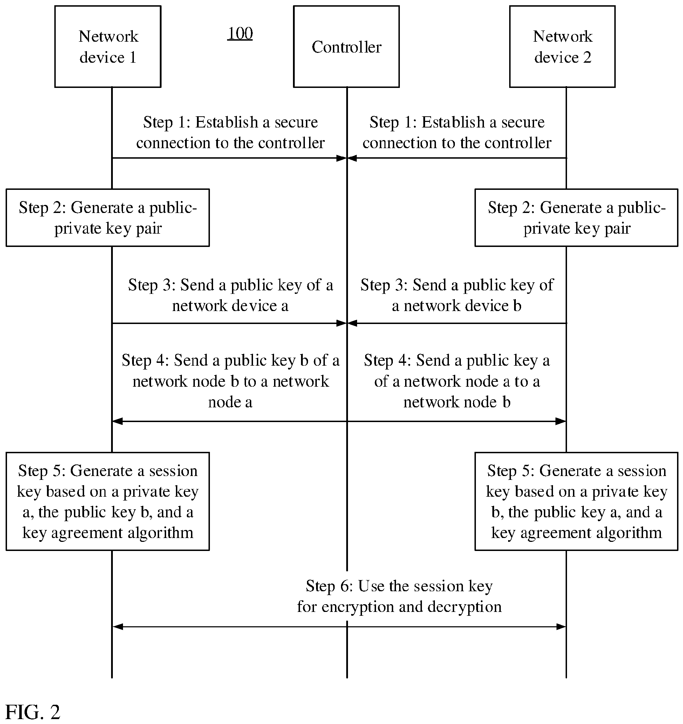

In the scenario shown in FIG. 1, when traffic is transmitted between the network device 1 and the network device 2, and a communication connection is established between the network device 1 and the network device 2, a possible technology is to use a same encryption policy for all packets in the same traffic. The following describes a possible communication method 100 with reference to FIG. 2. The method includes the following steps.

Step 1: A network device 1 and a network device 2 each establish a secure connection to a controller.

Step 2: The network device 1 generates a public-private key pair (including a public key a and a private key a corresponding to the public key a), and the network device 2 generates a public-private key pair (including a public key b and a private key b corresponding to the public key b).

Step 3: The network device 1 and the network device 2 send the respective public keys to the controller.

Step 4: The controller sends the public key a of the network device 1 to the network device 2, and sends the public key b of the network device 2 to the network device a.

Step 5: The network device 1 generates a session key based on the private key a, the public key a, the public key b, and a key exchange method, and the network device 2 generates a session key based on the private key b, the public key b, the public key a, and a key exchange method. The key exchange method ensures that two network devices can obtain a matching session key through negotiation.

Step 6: All subsequent traffic between the network device 1 and the network device 2 is encrypted and decrypted by using the session key.

In the communication method 100, all packets in the same traffic between node devices are encrypted by using one encryption policy, and the encryption policy has only one encryption algorithm, one session key, and the like. An attacker may actively construct a packet, encrypt the packet, observe an encrypted packet, and obtain a rule through analyzing, to accelerate cracking of the secure connection. In addition, once the attacker masters a cracking rule, the attacker can quickly crack the secure connection even if an update of the session key of the secure connection is accelerated.

It should be noted that, in the method 100, the network device 1 and the network device 2 exchange the public keys by using the controller, and generate a new session key through negotiation. A person skilled in the art may understand that the network device 1 and the network device 2 may alternatively directly exchange the public keys and generate a session key. Whether the controller is used is not specifically limited in this application.

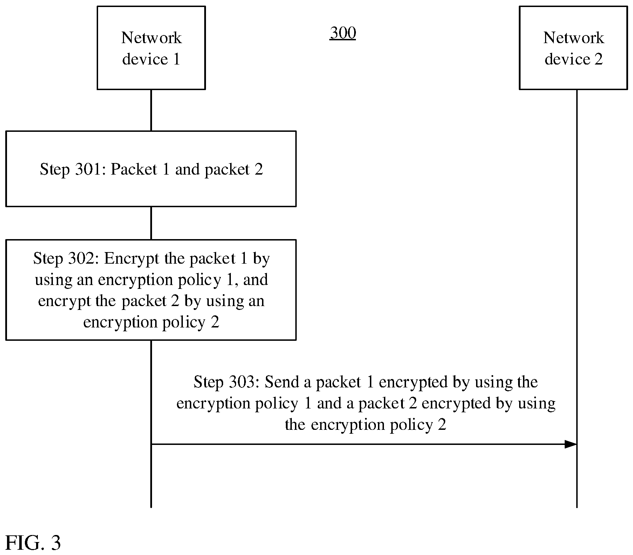

In view of the technical problem existing in the method 100, with reference to FIG. 3, the following describes in detail a secure communication method 300 according to an embodiment of this application. A network architecture to which the method 300 is applied includes a network device 1 and a network device 2. The network device 1 and the network device 2 are peers for secure communication. For example, when the network architecture to which the method 300 is applied is a VPN network, the network device 1 and the network device 2 each may be a PE device. When the network architecture to which the method 300 is applied is the network 100 shown in FIG. 1, the network device 1 may be the network device 1 shown in FIG. 1, the network device 2 may be the network device 2 shown in FIG. 1, and the network architecture may be the network architecture shown in FIG. 1. The method includes the following operations.

Step 301: The network device 1 receives a packet 1 and a packet 2.

The packet 1 and the packet 2 belong to same traffic 1. All packets included in the traffic 1 have a same traffic differentiation rule, in other words, all the packets in the traffic 1 match a traffic differentiation rule 1. The traffic rule may be, for example, any traffic differentiation rule described above. It should be understood that the traffic 1 may further include a packet other than the packet 1 and the packet 2.

Step 302: The network device 1 encrypts the packet 1 by using an encryption policy 1, and encrypts the packet 2 by using an encryption policy 2.

Specifically, an encryption policy group 1 is a set of a plurality of encryption policies. The encryption policy group 1 includes at least the encryption policy 1 and the encryption policy 2, and the encryption policy 1 and the encryption policy 2 are different encryption policies. The traffic 1 is associated with the encryption policy group 1, in other words, the traffic 1 is in one-to-one correspondence with the encryption policy group 1. Specifically, when receiving a packet included in the traffic 1, the network device 1 encrypts the packet by using an encryption policy in the encryption policy group 1. The traffic 1 includes a plurality of packets, the encryption policy group 1 includes a plurality of encryption policies, and one piece of traffic is associated with a plurality of encryption policies. After receiving the packets included in the traffic 1, based on a mapping relationship between the traffic 1 and the encryption policy group 1, the network device 1 encrypts, by using the encryption policy in the encryption policy group 1, each packet included in the traffic 1. The mapping relationship between the traffic 1 and the encryption policy group 1 may also be understood as a mapping relationship between the traffic differentiation rule 1 and the encryption policy group 1, and the two mapping relationships have a same meaning. To be specific, after receiving each packet included in the traffic 1, the network device 1 identifies that the packet belongs to the traffic 1 and matches the traffic differentiation rule 1, and selects, based on a mapping relationship between the traffic differentiation rule 1 and a first encryption policy group, an encryption policy in the encryption policy group 1 to encrypt the packet.

In a specific implementation, an encryption policy for any packet in the traffic 1 other than the packet 1 and the packet 2 may be the encryption policy 1 or the encryption policy 2. This is not limited in this embodiment of this application.

Step 303: The network device 1 sends the network device 2 a packet 1 encrypted by using the encryption policy 1 and a packet 2 encrypted by using the encryption policy 2, so that the network device 2 receives the encrypted packet 1 and the encrypted packet 2 from the network device 1.

This embodiment of this application provides a secure communication method. In the method, because there is a mapping relationship between the traffic 1 and the encryption policy group 1, the network device 1 may encrypt different packets in the traffic 1 by using different encryption policies in the encryption policy group 1, for example, encrypt the packet 1 in the traffic 1 by using the encryption policy 1, and encrypt the packet 2 in the traffic 1 by using the encryption policy 2. In this way, different packets in same traffic may be encrypted by using different encryption policies, thereby increasing a difficulty of cracking by an attacker and improving communication security.

In a specific implementation, in this embodiment of this application, if there is a mapping relationship between traffic and an encryption policy group, each packet in the traffic may be encrypted by using an encryption policy included in the encryption policy group. For details about how to select an encryption policy for each packet in the traffic, refer to descriptions in the following embodiment.

In a specific implementation, in this embodiment of this application, an encrypted packet may carry an identifier of an encryption policy. The identifier of the encryption policy is used by the network device 2 to identify an encryption policy used for encrypting a packet. Further, the network device 2 may determine an encryption policy for decrypting the packet. For example, the encrypted packet 1 carries an identifier 1 of the encryption policy 1, and the encrypted packet 2 carries an identifier 2 of the encryption policy 2.

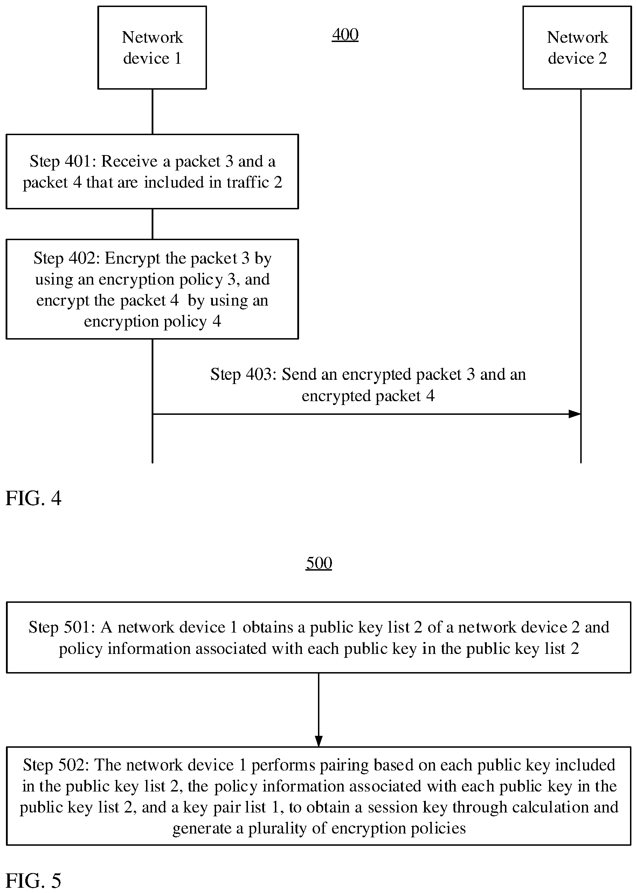

As shown in FIG. 4, a traffic sending method 300 according to an embodiment of this application may further include the following steps.

Step 401: A network device 1 receives a packet 3 and a packet 4 that are included in traffic 2.

All packets included in the traffic 2 have a same traffic differentiation rule. A traffic differentiation rule of traffic 1 is different from the traffic differentiation rule of the traffic 2. For example, the traffic 2 matches a traffic differentiation rule 2.

Step 402: The network device 1 encrypts the packet 3 by using an encryption policy 3, and encrypts the packet 4 by using an encryption policy 4. The encryption policy 3 for the packet 3 is different from the encryption policy 4 for the packet 4. Certainly, it may be understood that a packet 5 may further exist in the traffic 2, and an encryption policy for the packet 5 may be the same as or different from the encryption policy for the packet 4. Alternatively, the encryption policy for the packet 5 is the same as or different from the encryption policy for the packet 3.

In a possible implementation, in this embodiment of this application, the traffic 2 and the traffic 1 are associated with a same encryption policy group 1, in other words, the network device 1 encrypts each packet in the received traffic 2 by using at least one of a plurality of encryption policies included in the encryption policy group 1. For example, the network device 1 may encrypt the packet 3 by using an encryption policy 1, and encrypt the packet 4 by using an encryption policy 2. In this case, the encryption policy 1 and the encryption policy 3 are the same encryption policy, and the encryption policy 2 and the encryption policy 4 are the same encryption policy. Certainly, a person skilled in the art may understand that the encryption policy 3 and/or the encryption policy 4 may be encryption policies/an encryption policy different from either of the encryption policy 1 and the encryption policy 2, and the encryption policy group 1 further includes the encryption policy 3 and the encryption policy 4.

In another possible implementation, in this embodiment of this application, the traffic 2 and the traffic 1 are associated with different encryption policy groups. For example, if the traffic 2 is associated with an encryption policy group 2, the encryption policy for the packet 3 and the encryption policy for the packet 4 are encryption policies in the encryption policy group 2. When the traffic 2 and the traffic 1 are associated with different encryption policy groups, encryption policies included in the encryption policy group 2 are partially the same as or completely different from encryption policies included in the encryption policy group 1. In a possible manner, there is an intersection set between the encryption policy group 1 and the encryption policy group 2. For example, the intersection set includes the foregoing encryption policy 1 and/or encryption policy 2. In a possible manner, the encryption policy group 2 may be a subset of the encryption policy group 1. In a possible manner, an intersection set between the encryption policy group 1 and the encryption policy group 2 is empty. A person skilled in the art may understand that the "group" in the encryption policy group described in this application is a logical concept. For example, the traffic 1 is associated with the encryption policy group 1, but the encryption policy group 1 may actually be a set of several encryption policy groups. The several encryption policy groups are logically bound as a whole, and are used as one encryption policy group to be associated with the traffic 1. The several encryption policy groups may alternatively be associated with other different traffic respectively.

To improve reliability of secure transmission of all packets in one piece of traffic, in this embodiment of this application, encryption policies for at least two or more of the packets in the same traffic are different. For example, the encryption policy for the packet 3 is different from the encryption policy for the packet 4.

Step 403: The network device 1 sends an encrypted packet 3 and an encrypted packet 4 to a network device 2, so that the network device 2 receives the encrypted packet 3 and the encrypted packet 4.

It should be noted that there is no sequence between any one of step 401 to step 403 shown in FIG. 4 and any one of step 301 to step 303 described in FIG. 3. For example, step 401 may be performed before or after step 301, or step 401 and step 301 may be simultaneously performed. This is not limited in this embodiment of this application.

In conclusion, this application shows, with reference to embodiments shown in FIG. 3 and FIG. 4, that packets in different traffic (for example, the traffic 1 and the traffic 2) may be encrypted by using encryption policies in a same encryption policy group.

In a specific embodiment, before step 301 or step 401, the method may further include: The network device 1 and the network device 2 negotiate an encryption policy group (for example, the encryption policy group 1).

In a specific implementation, the network device 1 and the network device 2 may statically configure the encryption policy group 1.

For example, an encryption algorithm and an encryption key that correspond to each encryption policy in the encryption policy group 1 are configured in the network device 1 or the network device 2.

In another specific implementation, the network device 1 and the network device 2 may dynamically negotiate the encryption policy group 1. With reference to FIG. 5, the following describes in detail an encryption policy group negotiation method 500 according to an embodiment of this application by using an example in which a network device 1 generates an encryption policy. The method includes the following steps.

Step 501: The network device 1 obtains a public key list 2 of a network device 2 and policy information associated with each public key in the public key list 2.

The public key list 2 includes a plurality of public keys generated by the network device 2. A public key list 1 includes a plurality of public keys generated by the network device 1.

For an implementation process in which the network device 1 obtains the public key list 2 and the policy information associated with each public key in the public key list 2, refer to descriptions in the following embodiment. Details are not described herein.

Step 502: The network device 1 performs pairing based on each public key included in the public key list 2, the policy information associated with each public key in the public key list 2, and a key pair (public-private key pair) list 1 stored in the network device 1, to synthesize a session key and generate a plurality of encryption policies.

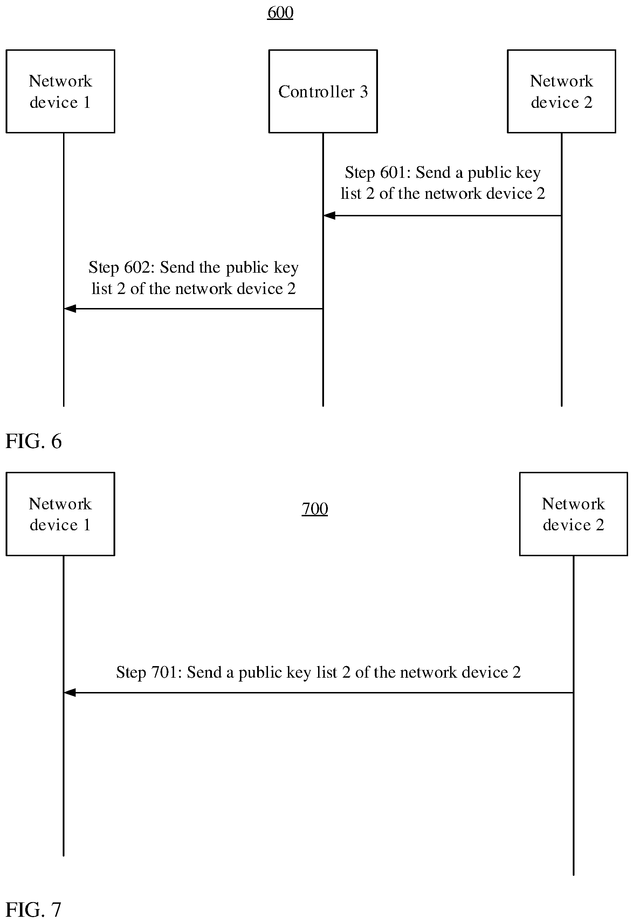

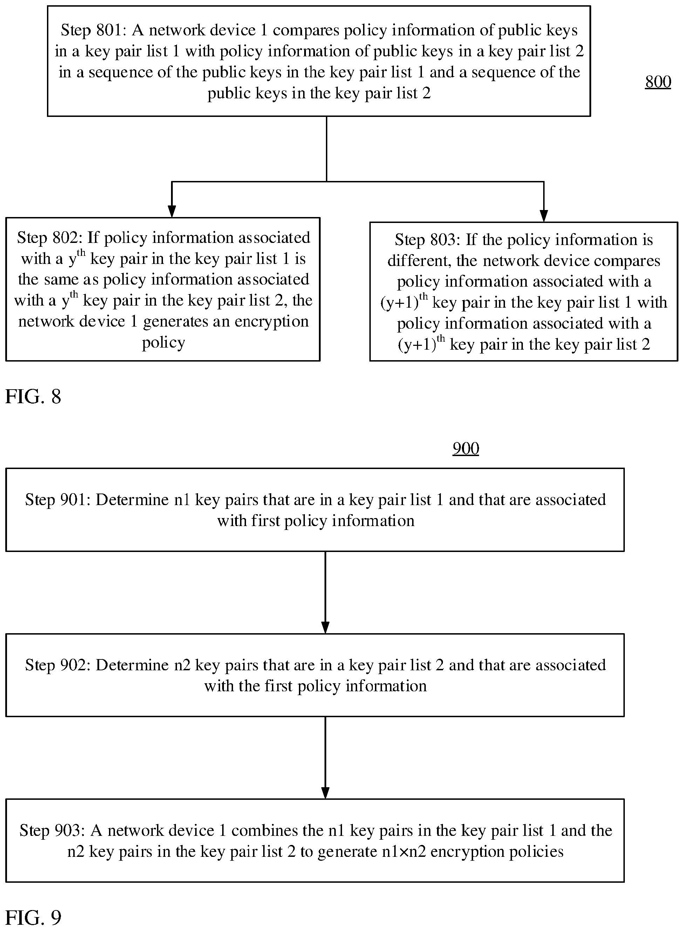

For a specific implementation of step 502, refer to descriptions of FIG. 7 or FIG. 8 in the following embodiment. Details are not described herein.

It should be noted that, in this embodiment of this application, when negotiating a plurality of encryption policies, the network device 1 and the network device 2 may further determine an identifier of each encryption policy. For example, when the network device 1 generates a plurality of encryption policies, the network device 1 may allocate an identifier to each of the plurality of encryption policies. In this case, after the network device 1 generates the plurality of encryption policies, the network device 1 may send the plurality of encryption policies and the identifier of each of the plurality of encryption policies to the network device 2. Alternatively, the network device 1 and the network device 2 jointly negotiate an identifier of each encryption policy. For example, the network device 2 indicates, to the network device 1, an identifier of each encryption policy generated by the network device 1. Alternatively, an identifier associated with an encryption policy that is generated by the network device 1 and that is obtained by the network device 1 and the network device 2 through negotiation includes a parameter allocated by the network device 1 and a parameter allocated by the network device 2.

In a specific implementation, before step 501, the method provided in this embodiment of this application may further include: The network device 1 generates the key pair (public-private key pair) list 1, and the network device 2 generates a key pair (public-private key pair) list 2.

A key pair list includes a plurality of key pairs. Each key pair includes one public key and a private key corresponding to the public key.

For example, specific content of the key pair list 1 is shown in Table 1.

**Table 1 Specific content of the key pair list 1**

| Key pair list 1 | Policy information | |
|---|---|---|
| | Key exchange method | Encryption algorithm (Encryption Algorithm) |
| Key pair 1 | Key exchange method (Key Exchange Method) 1 | Encryption algorithm 1 |
| Key pair 2 | Key exchange method 1 | Encryption algorithm 1 |
| Key pair 3 | Key exchange method 1 | Encryption algorithm 2 |
| Key pair 4 | Key exchange method 1 | Encryption algorithm 2 |
| Key pair 5 | Key exchange method 1 | Encryption algorithm 2 |
| Key pair 6 | Key exchange method 3 | Encryption algorithm 3 |

In another specific implementation, the policy information may further include an authentication algorithm. In this case, specific content of the key pair list 1 is shown in Table 2.

**Table 2 Specific content of the key pair list 1**

| Key pair list 1 | Policy information | | |
|---|---|---|---|
| | Key exchange method | Encryption algorithm (Encryption Algorithm) | Authentication algorithm (Authentication Algorithm) |
| Key pair 1 | Key exchange method (Key Exchange Method) 1 | Encryption algorithm 1 | Authentication algorithm 1 |
| Key pair 2 | Key exchange method 1 | Encryption algorithm 1 | Authentication algorithm 1 |
| Key pair 3 | Key exchange method 1 | Encryption algorithm 2 | Authentication algorithm 2 |
| Key pair 4 | Key exchange method 1 | Encryption algorithm 2 | Authentication algorithm 2 |
| Key pair 5 | Key exchange method 1 | Encryption algorithm 2 | Authentication algorithm 2 |
| Key pair 6 | Key exchange method 3 | Encryption algorithm 3 | Authentication algorithm 3 |

It may be understood that, when the policy information includes the authentication algorithm, the network device 1 and the network device 2 may negotiate the authentication algorithm when creating an encryption policy.

In a possible implementation, policy information (for example, key exchange methods, encryption algorithms, and authentication algorithms) associated with key pairs of the network device 1 or the network device 2 may be completely the same. For example, six key pairs shown in Table 1 or Table 2 correspond to three types of policy information. The policy information associated with the key pair 1 and the policy information associated with the key pair 2 are completely the same. The policy information associated with the key pair 3, the policy information associated with the key pair 4, and the policy information associated with the key pair 5 are completely the same.

In a possible implementation, policy information associated with key pairs of the network device 1 or the network device 2 is partially the same. For example, the policy information associated with the key pair 2 and the policy information associated with the key pair 3 are partially the same (where the key exchange methods are the same).

In a possible implementation, policy information associated with key pairs of the network device 1 or the network device 2 is completely different. For example, the policy information associated with the key pair 6 and the policy information associated with the key pair 1 are completely different. The policy information associated with the key pair 6 and the policy information associated with the key pair 2 are completely different.

In a specific implementation, in this embodiment of this application, the network device 1 and the network device 2 may configure, in the following manners, policy information associated with each key pair. This is not limited.

### Manner 1-1: Static configuration or negotiation configuration.

For example, policy information associated with each key pair is configured in the network device 1. Policy information associated with each key pair is configured in the network device 2. When establishing a control link, the network device 1 and the network device 2 negotiate policy information associated with each key pair in the key pair list 1 and policy information associated with each key pair in the key pair list 2.

### Manner 1-2: Configuration performed by a controller 3.

The controller 3 configures one or more pieces of policy information for the network device 1 or the network device 2. For example, the one or more pieces of policy information include policy information 1 to policy information 3. The policy information 1 is (Key Exchange Method 1, Encryption Algorithm 1, Authentication Algorithm 1). The policy information 2 is (Key Exchange Method 1, Encryption Algorithm 2, Authentication Algorithm 2). The policy information 3 is (Key Exchange Method 3, Encryption Algorithm 3, Authentication Algorithm 3). In this way, when generating the key pair list 1, the network device 1 may select one piece of policy information for each key pair in the key pair list 1 from the policy information 1 to the policy information 3. Similarly, when generating the key pair list 2, the network device 2 may select one piece of policy information for each key pair in the key pair list 2 from the policy information 1 to the policy information 3.

### Manner 1-3: Combined configuration.

A network device (for example, the network device 1 or the network device 2) has one or more key exchange methods, one or more encryption algorithms, and one or more authentication algorithms that are supported by the network device. The network device may combine the one or more key exchange methods, the one or more encryption algorithms, and the one or more authentication algorithms to generate a plurality of pieces of policy information.

For example, the plurality of key exchange methods supported by the network device 1 or the network device 2 are Key Exchange Method 1 and Key Exchange Method 2, the plurality of encryption algorithms supported by the network device 1 or the network device 2 are Encryption Algorithm 1 and Encryption Algorithm 2, and the plurality of authentication algorithms supported by the network device 1 or the network device 2 are Authentication Algorithm 1 and Authentication Algorithm 2. In this way, when generating a key pair list, the network device 1 or the network device 2 may randomly combine Key Exchange Method 1, Key Exchange Method 2, Encryption Algorithm 1, Encryption Algorithm 2, Authentication Algorithm 1, and Authentication Algorithm 2, and associate one piece of policy information with each key pair in the key pair list.

In a specific implementation, the one or more key exchange methods, the one or more encryption algorithms, and the one or more authentication algorithms that are supported by the network device 1 or the network device 2 may be configured locally in the network device 1 or the network device 2.

In another specific implementation, the one or more key exchange methods, the one or more encryption algorithms, and the one or more authentication algorithms that are supported by the network device 1 or the network device 2 may be configured by the controller 3 for the network device 1 or the network device 2.

In still another specific implementation, the network device 1 or the network device 2 may obtain, from a first device, the one or more key exchange methods, the one or more encryption algorithms, and the one or more authentication algorithms that are supported by the network device 1 or the network device 2. The first device stores the one or more key exchange methods, the one or more encryption algorithms, and the one or more authentication algorithms that are supported by the network device 1 or the network device 2.

For example, the network device 1 or the network device 2 combines Key Exchange Method 1, Key Exchange Method 2, Authentication Algorithm 1, Authentication Algorithm 2, Encryption Algorithm 1, and Encryption Algorithm 2, to generate four pieces of policy information, as shown in Table 3.

**Table 3**

| Policy information | Key exchange method | Encryption algorithm |
|---|---|---|
| Policy information 1 | Key Exchange Method 1 | Encryption Algorithm 1 |
| Policy information 2 | Key Exchange Method 1 | Encryption Algorithm 2 |
| Policy information 3 | Key Exchange Method 2 | Encryption Algorithm 1 |
| Policy information 4 | Key Exchange Method 2 | Encryption Algorithm 2 |

For example, the network device 1 or the network device 2 combines Key Exchange Method 1, Key Exchange Method 2, Authentication Algorithm 1, Authentication Algorithm 2, Encryption Algorithm 1, and Encryption Algorithm 2, to generate eight pieces of policy information, as shown in Table 4.

**Table 4**

| Policy information | Key exchange method | Encryption algorithm | Authentication algorithm |
|---|---|---|---|
| Policy information 1 | Key Exchange Method 1 | Encryption Algorithm 1 | Authentication Algorithm 1 |
| Policy information 2 | Key Exchange Method 1 | Encryption Algorithm 1 | Authentication Algorithm 2 |
| Policy information 3 | Key Exchange Method 1 | Encryption Algorithm 2 | Authentication Algorithm 1 |
| Policy information 4 | Key Exchange Method 1 | Encryption Algorithm 2 | Authentication Algorithm 2 |
| Policy information 5 | Key Exchange Method 2 | Encryption Algorithm 1 | Authentication Algorithm 1 |
| Policy information 6 | Key Exchange Method 2 | Encryption Algorithm 1 | Authentication Algorithm 2 |
| Policy information 7 | Key Exchange Method 2 | Encryption Algorithm 2 | Authentication Algorithm 1 |
| Policy information 8 | Key Exchange Method 2 | Encryption Algorithm 2 | Authentication Algorithm 2 |

### Manner 1-4: Combined configuration.

A plurality of key exchange methods are configured in the network device 1, and an encryption algorithm that can be used is configured for each key exchange method. In this way, the network device 1 may generate policy information based on the plurality of key exchange methods and the encryption algorithms.

In a specific implementation, the controller 3 may configure the plurality of key exchange methods and the encryption algorithms for the network device 1.

For example, Key Exchange Method 1, Key Exchange Method 2, and Key Exchange Method 3 are configured in the network device 1. Encryption algorithms configured for Key Exchange Method 1 are the encryption algorithm Encryption Algorithm 1, Encryption Algorithm 2, and Encryption Algorithm 3. Encryption algorithms configured for Key Exchange Method 2 are Encryption Algorithm 2 and Encryption Algorithm 3. An encryption algorithm configured for Key Exchange Method 3 is Encryption Algorithm 3.

In conclusion, the network device 1 may generate the policy information 1 (Key Exchange Method 1, Encryption Algorithm 1), the policy information 2 (Key Exchange Method 1, Encryption Algorithm 2), the policy information 3 (Key Exchange Method 1, Encryption Algorithm 3), the policy information 4 (Key Exchange Method 2, Encryption Algorithm 2), the policy information 5 (Key Exchange Method 2, Encryption Algorithm 3), and the policy information 6 (Key Exchange Method 3, Encryption Algorithm 3).

It may be understood that, alternatively, a plurality of encryption algorithms may be first configured in the network device 1, and then a key exchange method associated with each of the plurality of encryption algorithms may be configured. In this way, the network device 1 may also generate the policy information.

It should be noted that the authentication algorithm in the policy information is omitted in the foregoing example. If the authentication algorithm needs to be considered, an associated authentication algorithm may be configured for each encryption algorithm. For a specific combination process, refer to the foregoing example. Details are not described again in this embodiment of this application.

In a specific implementation, FIG. 6 describes a public key obtaining method 600 by using an example in which a network device 1 obtains a public key list of a network device 2. The method may be performed after step 501. The method 600 corresponds to the process of obtaining the public key list 2 of the network device 2 in step 501. The method includes the following steps.

Step 601: The network device 2 sends the public key list 2 of the network device 2 to a controller 3. The public key list 2 includes a plurality of public keys (for example, a public key 6 to a public key 11) of the network device 2, so that the controller 3 receives the public key list 2 of the network device 2.

Step 602: The controller 3 sends the public key list 2 to the network device 1, so that the network device 1 receives the public key list 2.

It may be understood that the method shown in FIG. 6 may further include a process in which the network device 1 sends a public key list 1 to the controller 3, and the controller 3 sends the public key list 1 to the network device 2.

FIG. 7 describes a public key obtaining method 700 by using an example in which a network device 1 obtains a public key list of a network device 2. The method may be performed after step 501. The method 700 corresponds to the process of obtaining the public key list 2 of the network device 2 in step 501. The method includes the following step.

Step 701: The network device 2 sends the public key list 2 of the network device 2 to the network device 1. The public key list 2 includes a plurality of public keys (for example, a public key 6 to a public key 11), so that the network device 1 receives the public key list 2.

A difference between the embodiment shown in FIG. 7 and the embodiment shown in FIG. 6 lies in that in FIG. 6, the public key list 2 of the network device 2 is forwarded by the controller 3 to the network device 1, but in the embodiment shown in FIG. 7, the public key list 2 of the network device 2 may be directly sent to the network device 1.

In embodiments of this application, when generating an encryption policy, a local device (for example, the network device 1) not only needs to know a public key of a peer device (for example, the network device 2), but also needs to know policy information associated with each public key of the peer device. The following uses the network device 1 as an example, and describes, in any one of Manner 2-1, Manner 2-2, or Manner 2-3, a process in which the network device 1 obtains policy information associated with each public key in the public key list 2. Any one of Manner 2-1, Manner 2-2, or Manner 2-3 may correspond to the process in which the network device 1 obtains policy information associated with each of a plurality of public keys of the network device 2 in step 502.

Manner 2-1: A public key and policy information associated with the public key are released together.

In other words, step 601 may be implemented in the following manner: When sending the public key list 2 to the controller 3, the network device 2 further carries policy information associated with each public key in the public key list 2. Correspondingly, step 502 in the embodiment of this application may be implemented in the following manner: The network device 1 receives the public key list 2 and the policy information associated with each public key in the public key list 2 from the controller 3.

In other words, step 701 may be implemented in the following manner: The network device 2 sends the public key list 2 and policy information associated with each public key in the public key list 2 to the network device 1. Correspondingly, step 502 in the embodiment of this application may be implemented in the following manner: The network device 1 receives the public key list 2 and the policy information associated with each public key in the public key list 2 from the network device 2.

For example, the plurality of public keys of the network device 2 are the public key 6 to the public key 11. In this case, Table 5 shows a specific implementation of step 601 or step 701.

**Table 5 Each public key corresponds to one piece of policy information when the public key is released**

| | | | | | |
|---|---|---|---|---|---|
| Public key 6, Key_Exch_1, Encr_Alg_1, Auth_Alg_1 | Public key 7, Key_Exch_1, Encr_Alg_1, Auth_Alg_1 | Public key 8, Key_Exch_1, Encr_Alg_2, Auth_Alg_2 | Public key 9, Key_Exch_1, Encr_Alg_2, Auth_Alg_2 | Public key 10, Key_Exch_1, Encr_Alg_2, Auth_Alg_2 | Public key 11, Key_Exch_3, Encr_Alg_3, Auth_Alg_3 |

Key_Exch is Key Exchange, and indicates a key exchange method. Encr_Alg is Encryption Algorithm, and indicates an encryption algorithm. Auth_Alg is Authentication Algorithm, and indicates an authentication algorithm.

Manner 2-2: Policy information is released in a form of groups.

In other words, the network device 1 or the network device 2 may group a plurality of public keys having same policy information into a same public key group. Public keys in a same public key group have same policy information, and public keys in different public key groups are associated with different policy information. Each public key group is associated with one piece of policy information.

For example, the network device 2 is used as an example. The network device 2 groups the public key 6 to the public key 11 into a public key group 1, a public key group 2, and a public key group 3 according to Table 5. The public key 6 and the public key 7 belong to the public key group 1, and have same policy information. The public key 8, the public key 9, and the public key 10 belong to the public key group 2, and have same policy information. The public key 11 belongs to the public key group 3. As shown in Table 6:

**Table 6 Public keys and policy information are released in a form of groups**

| | | |
|---|---|---|
| Public key group 1 (a public key 6 and a public key 7) | Public key group 2 (a public key 8, a public key 9, and a public key 10) | Public key group 3 (a public key 11) Key_Exch_3, |
| Key_Exch_1, Encr_Alg_1, Auth_Alg_1, | Key_Exch_1, Encr_Alg_2, Auth_Alg_2, | Encr_Alg_3, Auth_Alg_3, |

In Manner 2-2, step 601 may be specifically implemented in the following manner: The network device 2 sends the public key group 1, policy information associated with the public key group 1, the public key group 2, policy information associated with the public key group 2, the public key group 3, and policy information associated with the public key group 3 to the controller 3. Correspondingly, the network device 1 may receive the public key group 1, the policy information associated with the public key group 1, the public key group 2, the policy information associated with the public key group 2, the public key group 3, and the policy information associated with the public key group 3 from the controller 3.

In Manner 2-2, step 701 may be specifically implemented in the following manner: The network device 2 sends the public key group 1, policy information associated with the public key group 1, the public key group 2, policy information associated with the public key group 2, the public key group 3, and policy information associated with the public key group 3 to the network device 1. Correspondingly, the network device 1 may receive the public key group 1, the policy information associated with the public key group 1, the public key group 2, the policy information associated with the public key group 2, the public key group 3, and the policy information associated with the public key group 3 from the network device 2.

Manner 2-3: Policy information associated with each public key of the peer device is configured in the local device.

When releasing respective public keys, the network device 1 or the network device 2 may not carry the policy information associated with each public key. However, it may be ensured, through configuration, that the network device 1 knows policy information associated with each public key of the network device 2, and that the network device 2 knows policy information associated with each public key of the network device 1.

For example, policy information that is configured in the network device 1 and that is associated with the public key 6 and the public key 7 is policy information 1 (as shown in Table 3 or Table 4), policy information that is configured in the network device 1 and that is associated with the public key 8, the public key 9, and the public key 10 is policy information 2 (as shown in Table 3 or Table 4), and policy information that is configured in the network device 1 and that is associated with the public key 11 is policy information 3 (as shown in Table 3 or Table 4).

For example, the network device 2 sends the public key in Manner 2-3. In this case, step 701 or step 601 may be implemented by using Table 7.

**Table 7 No policy is carried when a public key is released**

| | | | | | |
|---|---|---|---|---|---|
| Public key 11 | Public key 12 | Public key 13 | Public key 14 | Public key 15 | Public key 16 |

A method used by the network device 1 or the network device 2 to perform pairing among a public key, policy information corresponding to the public key, and a key pair list is not limited in embodiments of this application, provided that both the network device 1 and the network device 2 know and use the method at the same time, and it can be ensured that finally, an encryption policy generated by the network device 1 matches an encryption policy generated by the network device 2. For example, step 502 in embodiments of this application may be implemented by using a method shown in FIG. 8 or a method shown in FIG. 9.

In a specific implementation, FIG. 8 uses a network device 1 as an example to describe an encryption policy generation method 800 according to an embodiment of this application. The method 800 corresponds to step 502, and the method includes the following steps.

Step 801: The network device 1 compares policy information of public keys in a key pair list 1 with policy information of public keys in a key pair list 2 in a sequence of the public keys in the key pair list 1 and a sequence of the public keys in the key pair list 2.

It may be understood that the network device 1 may determine the sequence of the public keys in the key pair list 2 in the following manners: (1) When the network device 2 sends the key pair list 2, the key pair list 2 carries the sequence of the public keys. (2) The network device 1 determines, in a sequence of parsing the public keys in the key pair list 2, that the key pair list 2 carries the sequence of the public keys. The sequence of the public keys in the key pair list 1 may be autonomously determined by the network device 1, or determined by the network device 1 in a generation sequence of the public keys in the key pair list 1.

Step 802: If policy information associated with a y^{th} key pair in the key pair list 1 is the same as policy information associated with a y^{th} key pair in the key pair list 2, the network device 1 generates an encryption policy.

Step 803: If policy information associated with a y^{th} key pair in the key pair list 1 is different from policy information associated with a y^{th} key pair in the key pair list 2, the network device compares policy information associated with a (y+1)^{th} key pair in the key pair list 1 with policy information associated with a (y+1)^{th} key pair in the key pair list 2.

For example, the key pair list 1 of the network device 1 and the key pair list 2 of the network device 2 are shown in Table 8 below. The key pair list 1 includes a key pair 1 to a key pair 5, and four types of policy information are used in total. The key pair list 2 includes a key pair 6 to a key pair 11, and three types of policy information are used in total.

**Table 8**

| Key pair list 1 of the network device 1 (it is assumed that a plurality of public keys in the key pair list 1 sent by the network device 1 are sent in sequence from top to bottom) | | | | |
|---|---|---|---|---|
| Index (Index) | Key pair list | Key exchange method | Encryption algorithm | Authentication algorithm |
| 1 | Key pair 1 | Key_Exch_1 | Encr_Alg_1 | Auth Alg_1 |
| 2 | Key pair 2 | Key_Exch_1 | Encr_Alg_1 | Auth Alg_1 |
| 3 | Key pair 3 | Key_Exch_1 | Encr_Alg_2 | Auth_Alg_2 |
| 4 | Key pair 4 | Key_Exch_2 | Encr_Alg_2 | Auth_Alg_2 |
| 5 | Key pair 5 | Key_Exch_2 | Encr_Alg_3 | Auth_Alg_2 |

| Key pair list 2 of the network device 2 (it is assumed that a plurality of public keys in the key pair list 2 sent by the network device 2 are sent in sequence from top to bottom) | | | | |
|---|---|---|---|---|
| Index | Key pair list 2 | Key exchange method | Encryption algorithm | Authentication algorithm |
| 1 | Key pair 6 | Key_Exch_1 | Encr Alg_1 | Auth Alg_1 |
| 2 | Key pair 7 | Key_Exch_1 | Encr_Alg_1 | Auth Alg_1 |
| 3 | Key pair 8 | Key_Exch_1 | Encr_Alg_2 | Auth_Alg_2 |
| 4 | Key pair 9 | Key_Exch_2 | Encr_Alg_3 | Auth_Alg_2 |
| 5 | Key pair 10 | Key_Exch_2 | Encr_Alg_3 | Auth_Alg_2 |
| 6 | Key pair 11 | Key_Exch_3 | Encr_Alg_3 | Auth_Alg_3 |

For example, the network device 1 separately selects a key pair from the key pair list 1 and the key pair list 2 in a sequence of public keys in a key pair list to which the public keys belong. The network device 1 compares whether policy information associated with the key pair selected from the key pair list 1 is the same as policy information associated with the key pair selected from the key pair list 2. If the policy information associated with the key pair selected by the network device 1 from the key pair list 1 is the same as the policy information associated with the key pair selected by the network device 1 from the key pair list 2, the network device 1 calculates a session key through combination and generates an encryption policy.

For example, with reference to Table 8, a pairing process is as follows:
The network device 1 compares policy information associated with the 1^{st} key pair (for example, the key pair 1) in the key pair list 1 with policy information associated with the 1^{st} key pair (for example, the key pair 6) in the key pair list 2. Refer to Table 8. It can be learned that if the policy information associated with the key pair 1 is the same as the policy information associated with the key pair 6, the network device 1 considers that the key pair 1 and the key pair 6 can be successfully paired. Therefore, the network device 1 may calculate a session key and generate an encryption policy based on the key pair 1 and the key pair 6.

Similarly, the network device 1 compares policy information associated with the 2^{nd} key pair (for example, the key pair 2) in the key pair list 1 with policy information associated with the 2^{nd} key pair (for example, the key pair 7) in the key pair list 2. If the policy information associated with the key pair 2 is the same as the policy information associated with the key pair 7, the network device 1 may calculate a session key and generate an encryption policy based on the key pair 2 and the key pair 7.

The network device 1 compares policy information associated with the 3^{rd} key pair (for example, the key pair 3) in the key pair list 1 with policy information associated with the 3^{rd} key pair (for example, the key pair 8) in the key pair list 2. If the policy information associated with the key pair 3 is the same as the policy information associated with the key pair 8, the network device 1 may calculate a session key and generate an encryption policy based on the key pair 3 and the key pair 8.

However, because policy information associated with the 4^{th} key pair (for example, the key pair 4) in the key pair list 1 and policy information associated with the 4^{th} key pair (for example, the key pair 9) in the key pair list 2 are different (where encryption algorithms are different), the network device 1 determines that the key pair 4 and the key pair 9 fail to be paired. The network device 1 gives up generating an encryption policy by using the key pair 4 and the key pair 9.

Next, the network device 1 continues to compare policy information associated with the 5^{th} key pair (for example, the key pair 5) in the key pair list 1 with policy information associated with the 5^{th} key pair (for example, the key pair 10) in the key pair list 2. If the policy information associated with the key pair 5 is the same as the policy information associated with the key pair 10, the pairing succeeds, and the network device 1 may generate an encryption policy based on the key pair 5 and the key pair 10.

In addition, for the key pair 11 of the network device 2, because a key pair compared with the key pair 11 of the network device 2 does not exist in the key pair list of the network device 1, the network device 1 determines that the key pair 11 fails to be paired.

Finally, the network device 1 and the network device 2 generate four encryption policies in total, as shown in the following Table 9 (where N/A in Table 9 indicates that no encryption policy is actually generated due to a pairing failure).

**Table 9**

| Encryption policy after pairing (other fields in the encryption policy are omitted) | | | | | |
|---|---|---|---|---|---|
| Network device 1 | | | | | |

| Index | Key pair list 1 | Peer public key | Key exchange method | Encryption algorithm | Authentication algorithm |
|---|---|---|---|---|---|
| 1 | Key pair 1 | Key pair 6 (public key) | Key_Exch_1 | Encr_Alg_1 | Auth_Alg_1 |
| 2 | Key pair 2 | Key pair 7 (public key) | Key_Exch_1 | Encr_Alg_1 | Auth_Alg_1 |
| 3 | Key pair 3 | Key pair 8 (public key) | Key_Exch_1 | Encr_Alg_2 | Auth_Alg_2 |
| 4 | Key pair 5 | Key pair 10 (public key) | Key_Exch_2 | Encr_Alg_3 | Auth_Alg_2 |
| N/A | Key pair 4 | Unmatched (pairing failure) | Key_Exch_2 | Encr_Alg_2 | Auth_Alg_2 |

| Network device 2 | | | | | |
|---|---|---|---|---|---|
| Index | Key pair list 2 | Peer public key | Key exchange method | Encryption algorithm | Authentication algorithm |
| 1 | Key pair 6 | Key pair 1 (public key) | Key_Exch_1 | Encr_Alg_1 | Auth_Alg_1 |
| 2 | Key pair 7 | Key pair 2 (public key) | Key_Exch_1 | Encr_Alg_1 | Auth_Alg_1 |
| 3 | Key pair 8 | Key pair 3 (public key) | Key_Exch_1 | Encr_Alg_2 | Auth_Alg_2 |
| 4 | Key pair 10 | Key pair 5 (public key) | Key_Exch_2 | Encr_Alg_3 | Auth_Alg_2 |
| N/A | Key pair 9 | Unmatched (pairing failure) | Key_Exch_2 | Encr_Alg_3 | Auth_Alg_2 |
| N/A | Key pair 11 | Unmatched (pairing failure) | Key_Exch_3 | Encr_Alg_3 | Auth_Alg_3 |

FIG. 9 uses a network device 1 as an example to describe an encryption policy generation method 900 according to an embodiment of this application. The method 900 corresponds to step 502, and the method includes the following steps.

Step 901: The network device 1 determines n1 key pairs that are in a key pair list 1 and that are associated with first policy information. The first policy information is any one of all pieces of policy information included in the key pair list 1.

Step 902: The network device 1 determines n2 public keys that are in a key pair list 2 and that are associated with the first policy information.

Step 903: The network device 1 combines the n1 key pairs in the key pair list 1 and the n2 public keys in the key pair list 2 to generate n1×n2 encryption policies.

For example, Table 8 provides the key pair list 1 of the network device 1 and the key pair list 2 of the network device 2.

In other words, FIG. 9 mainly describes the following: When performing pairing among a public key, policy information associated with the public key, and a key pair list, the network device 1 first performs selection based on the policy information, combines a key pair in the key pair list 1 and a key pair in the key pair list 2 that have the same policy information, then calculates a session key, and generates an encryption policy.

With reference to Table 8, a network device performs pairing among a public key, a policy corresponding to the public key, and a key pair list as follows:
For example, the first policy information is policy information 1 (Key_Exch_1, Encr_Alg_1, Auth Alg_1). With reference to FIG. 8, it can be learned that if the policy information 1 is used by all of the key pair 1, the key pair 2, the key pair 6, and the key pair 7. In this case, the network device 1 combines the key pair 1, the key pair 2, the key pair 6, and the key pair 7, and may finally obtain four combination results. Therefore, four encryption policies may be generated.

Specifically, the network device 1 generates an encryption policy based on the key pair 1 and the key pair 6, and generates an encryption policy based on the key pair 1 and the key pair 7. The network device 1 generates an encryption policy based on the key pair 2 and the key pair 6, and generates an encryption policy based on the key pair 2 and the key pair 7.

For example, the first policy information is policy information 2 (Key_Exch_1, Encr_Alg_2, Auth_Alg_2). If the policy information 2 is used by both the key pair 3 and the key pair 8, the network device 1 combines the key pair 3 and the key pair 8, and finally may obtain one combination result. Therefore, one encryption policy may be generated. That is, the network device 1 generates an encryption policy based on the key pair 3 and the key pair 8.

For example, the first policy information is policy information 3 (Key_Exch_2, Encr_Alg_2, Auth_Alg_2). If the policy information 3 is only used by the key pair 4, pairing cannot be performed. In other words, the network device 1 gives up generating an encryption policy by using the pair 4.

For example, the first policy information is policy information 4 (Key_Exch_2, Encr_Alg_3, Auth_Alg_2). If the policy information 4 is used by all of the key pair 5, the key pair 9, and the key pair 10, the network device 1 combines the key pair 5 and the key pair 9 to generate an encryption policy. The network device 1 combines the key pair 5 and the key pair 10 to generate an encryption policy.

For example, the first policy information is policy information 5 (Key_Exch_3, Encr_Alg_3, Auth_Alg_3). If the policy information 5 is only used by the key pair 11, pairing cannot be performed.

Finally, the network device 1 and the network device 2 perform pairing to generate seven encryption policies, as shown in the following Table 10:

**Table 10**

| Encryption policy after pairing (other fields in the encryption policy are omitted) | | | | | |
|---|---|---|---|---|---|
| Network device 1 | | | | | |
| Index | Key pair list 1 | Peer public key | Key exchange method | Encryption algorithm | Authentication algorithm |
| 1 | Key pair 1 | Key pair 6 (public key) | Key_Exch_1 | Encr_Alg_1 | Auth_Alg_1 |
| 2 | Key pair 1 | Key pair 7 (public key) | Key_Exch_1 | Encr_Alg_1 | Auth_Alg_1 |
| 3 | Key pair 2 | Key pair 6 (public key) | Key_Exch_1 | Encr_Alg_1 | Auth_Alg_1 |
| 4 | Key pair 2 | Key pair 7 (public key) | Key_Exch_1 | Encr_Alg_1 | Auth_Alg_1 |
| 5 | Key pair 3 | Key pair 8 (public key) | Key_Exch_1 | Encr_Alg_2 | Auth_Alg_2 |
| 6 | Key pair 5 | Key pair 9 (public key) | Key_Exch_2 | Encr_Alg_3 | Auth_Alg_2 |
| 7 | Key pair 5 | Key pair 10 (public key) | Key_Exch_2 | Encr_Alg_3 | Auth_Alg_2 |
| N/A | Key pair 4 | Unmatched (pairing failure) | Key_Exch_2 | Encr_Alg_2 | Auth_Alg_2 |

| Network device 2 | | | | | |
|---|---|---|---|---|---|
| Index | Key pair list 2 | Peer public key | Key exchange method | Encryption algorithm | Authentication algorithm |
| 1 | Key pair 6 | Key pair 1 (public key) | Key_Exch_1 | Encr_Alg_1 | Auth_Alg_1 |
| 2 | Key pair 7 | Key pair 1 (public key) | Key_Exch_1 | Encr_Alg_1 | Auth_Alg_1 |
| 3 | Key pair 6 | Key pair 2 (public key) | Key_Exch_1 | Encr_Alg_1 | Auth_Alg_1 |
| 4 | Key pair 7 | Key pair 2 (public key) | Key_Exch_1 | Encr_Alg_1 | Auth_Alg_1 |
| 5 | Key pair 8 | Key pair 3 (public key) | Key_Exch_1 | Encr_Alg_2 | Auth_Alg_2 |
| 6 | Key pair 9 | Key pair 5 (public key) | Key_Exch_2 | Encr_Alg_3 | Auth_Alg_2 |
| 7 | Key pair 10 | Key pair 5 (public key) | Key_Exch_2 | Encr_Alg_3 | Auth_Alg_2 |
| N/A | Key pair 11 | Unmatched (pairing failure) | Key_Exch_3 | Encr_Alg_3 | Auth_Alg_3 |

In a specific embodiment, before step 301 or step 401, the method may further include: The network device 1 associates traffic 1 or traffic 2 with an encryption policy group 1.

It should be noted that, in the foregoing example, the policy information includes the authentication algorithm. When the policy information does not include the authentication algorithm, for a combination pairing manner, refer to the foregoing process. Details are not described herein again in this embodiment of this application. For example, policy information X includes Key_Exch_1, Encr_Alg_3, and Auth_Alg_3. In this case, if both a key pair A in the key pair list 1 and a key pair B in the key pair list 2 are associated with the policy information X, the network device 1 may generate an encryption policy based on the key pair A and the key pair B. However, when the policy information X includes Key_Exch_1 and Encr_Alg_3, and the key pair B and a key pair C in the key pair list 2 and the key pair A may be associated with the policy information X. Therefore, the network device 1 may generate an encryption policy based on the key pair A and the key pair B, and generate an encryption policy based on the key pair A and the key pair C.

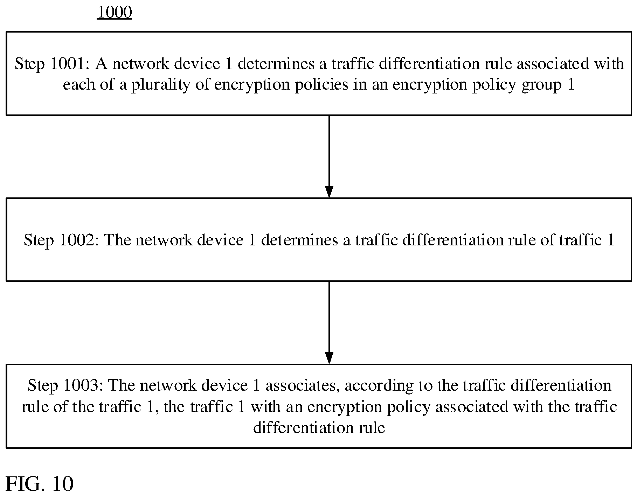

In a specific implementation, the network device 1 may associate the traffic 1 or the traffic 2 with the encryption policy group 1 by using a method shown in FIG. 10. As shown in FIG. 10, a method 1000 for associating traffic with an encryption policy group is described by using the network device 1 and the traffic 1 as an example. The method 1000 includes the following steps.

Step 1001: The network device 1 determines a traffic differentiation rule associated with each of a plurality of encryption policies in the encryption policy group 1.

In a specific implementation, one traffic differentiation rule may be associated with two or more encryption policies.

For example, the network device 1 may associate an ACL 1 with an encryption policy 1, and associate the ACL 1 with an encryption policy 2. The network device 1 may associate a VPN 1 with the encryption policy 2 and an encryption policy 3. The network device 1 may associate an interface 1 with the encryption policy 3 and the encryption policy 2.

In a specific implementation, different traffic differentiation rules may have a same encryption policy.

For example, the network device 1 performs autonomous configuration. The network device 1 may configure traffic matching an ACL A and an ACL B to use the encryption policy 1, the encryption policy 2, and the encryption policy 3. The network device 1 configures traffic in a home VPN C to use the encryption policy 2, the encryption policy 3, and an encryption policy 4. The network device 1 configures traffic forwarded through an interface D to use an encryption policy 5, an encryption policy 6, and an encryption policy 7. Therefore, if the traffic 1 matches the ACL A, the network device 1 may associate the traffic 1 with the encryption policy 1, the encryption policy 2, and the encryption policy 3.

In a possible implementation, the network device 1 may autonomously determine or negotiate with the network device 2 to determine the traffic differentiation rule associated with each encryption policy. Certainly, the traffic differentiation rule associated with each encryption policy may alternatively be configured by a controller 3 for the network device 1. This is not limited in this embodiment of this application.

Step 1002: The network device 1 determines a traffic differentiation rule of the traffic 1.

In a specific implementation, the network device 1 may determine, based on a condition that each packet included in the traffic 1 satisfies, the traffic differentiation rule of the traffic 1.

Step 1003: The network device 1 associates, according to the traffic differentiation rule of the traffic 1, the traffic 1 with an encryption policy associated with the traffic differentiation rule.

For example, if traffic X matches the ACL A, and the traffic X is forwarded through the interface D, the traffic X may be associated with the encryption policy 1, the encryption policy 2, the encryption policy 3, the encryption policy 5, the encryption policy 6, and the encryption policy 7.

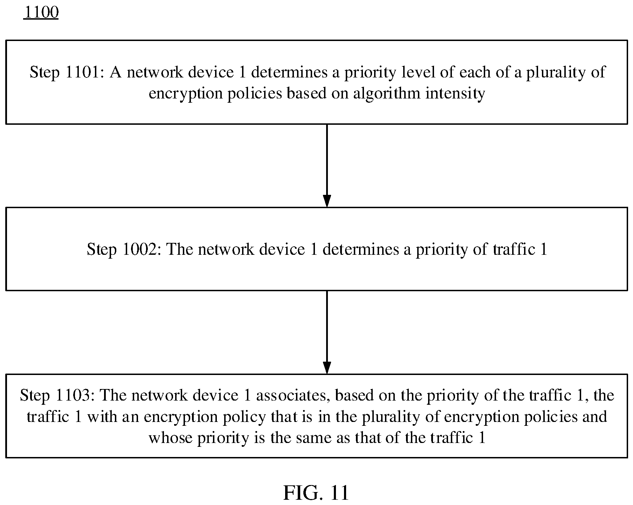

Different key exchange methods, authentication algorithms, and encryption algorithms may have different intensity. A high-intensity algorithm is difficult to be cracked but usually affects performance. A low-intensity algorithm can achieve high performance but is less difficult to be cracked than the high-intensity algorithm. Therefore, for different services, algorithm intensity that needs to be used may also be different. Based on this, in a specific implementation, FIG. 11 shows a method 1100 for classifying and associating traffic and encryption policies based on algorithm intensity. The method 1100 corresponds to the foregoing description in which the network device 1 associates the traffic 1 or the traffic 2 with the encryption policy group 1. The method includes the following steps.

Step 1101: The network device 1 determines a priority level of each of a plurality of encryption policies based on algorithm intensity. Different encryption policies have different encryption priorities.

For example, the network device 1 may enable, by specifying a priority of a policy or an algorithm, a generated encryption policy to generate a corresponding encryption priority, or may enable, by specifying weights of algorithms, calculating a sum of weights of algorithms in an encryption policy, and comparing sums of weights of encryption policies, the generated encryption policy to generate an encryption priority, or may differentiate between encryption priorities in another manner. This is not limited in this embodiment of this application.

For example, priorities of encryption policies are differentiated between as follows: Algorithms are represented as three levels: "red (red)", "yellow (yellow)", and "green (green)" based on intensity (high, medium, and low). The network device 1 may determine that a priority of an encryption policy that includes the "red" algorithm is "red". The network device 1 may determine that a priority of an encryption policy that includes the "yellow" algorithm but does not include the "red" algorithm is "yellow". The network device 1 may determine that a priority of an encryption policy that includes the "green" algorithm but does not include the "red" algorithm or the "yellow" algorithm is "green". Red indicates high, yellow indicates medium, and green indicates low. In an implementation, high, medium, and low intensity of the algorithms may alternatively be represented by using ABC or 123. A or 1 indicates high, B or 2 indicates medium, and C or 3 indicates low. Certainly, high, medium, and low intensity of the algorithms may alternatively be identified in another manner. This is not limited in this embodiment of this application.

Step 1102: The network device 1 determines a priority of the traffic 1.

For example, the network device 1 may determine that intensity required by traffic in a VPN 1 is set to red, intensity required by traffic in a VPN 2 is set to yellow, and intensity required by traffic in a VPN 3 is set to green. In this case, the traffic in the VPN 1, the VPN 2, and the VPN 3 may use encryption policies corresponding to different priorities.

Step 1103: The network device 1 associates, based on the priority of the traffic 1, the traffic 1 with an encryption policy that is in the plurality of encryption policies and whose priority is the same as that of the traffic 1.

For example, if the encryption policy 1, the encryption policy 2, and the encryption policy 3 all include the "red" algorithm, the network device 1 may determine that priorities of the encryption policy 1, the encryption policy 2, and the encryption policy 3 are "red". In addition, if the traffic 1 belongs to the VPN 1, the network device 1 may determine that the traffic 1 is associated with the encryption policy 1, the encryption policy 2, and the encryption policy 3, in other words, the encryption policy 1 to the encryption policy 3 are the encryption policies in the encryption policy group 1.

In a specific embodiment, before step 302 or step 402, the method provided in this embodiment of this application may further include: The network device 1 determines an encryption policy for each packet in the traffic 1 or traffic 2. In a specific implementation, the network device 1 autonomously configures an encryption policy for each packet in the traffic 1 in the encryption policy group 1.

In a specific implementation, the network device 1 determines an encryption policy for each packet in the traffic 1 in the encryption policy group 1 according to a first rule.

The following Example 2-1 describes a method for selecting an encryption policy for a packet according to an embodiment of this application. Example 2-1 corresponds to the foregoing description in which the network device 1 determines, according to the first rule, the encryption policy for each packet in the traffic 1 in the encryption policy group 1. The method includes: For each packet in the received traffic 1, according to a packet sorting rule, the network device 1 sequentially selects, for each packet from the encryption policy group 1 in a sequence of encryption policies, an encryption policy for encrypting the packet. The packet sorting rule may be, for example, selecting a corresponding encryption policy for a packet in a sequence of receiving packets, a sequence of sending packets, a sequence of IDs of interfaces through which packets are received, a sequence of IDs of interfaces through which packets are sent, or a sequence of processing packets by a processor. That the network device 1 sequentially selects an encryption policy for a packet refers to selecting an encryption policy for each packet in a sequence of encryption policies. The sequence of encryption policies may be, for example, sorting the encryption policies based on identifiers IDs of the encryption policies. Alternatively, the network device 1 sorts the encryption policies in a generation sequence of the encryption policies, or sort the encryption policies based on indexes of the encryption policies. This is not specifically limited in this application. For example, a sequence of packets included in the to-be-sent traffic 1 between the network device 1 and the network device 2 includes a packet 11 to a packet 16, as shown in Table 11 below (which are sent from left to right):

**Table 11**

| | | | | |
|---|---|---|---|---|
| Packet 1 | Packet 2 | Packet 3 | Packet 4 | Packet 5 |

For example, the encryption policy group 1 associated with the traffic 1 includes the encryption policy 1, the encryption policy 2, and the encryption policy 3. The network device 1 determines, according to a sorting rule, that a storage sequence of the encryption policies in the encryption policy group 1 is the encryption policy 1, the encryption policy 2, and the encryption policy 3. A sequence of the packets in the traffic 1 is shown in Table 11. The network device 1 may determine to encrypt the packet 1 by using the encryption policy 1. The network device 1 may encrypt the packet 12 by using the encryption policy 2. The network device 1 may encrypt the packet 13 by using the encryption policy 3. The network device 1 may encrypt the packet 14 by using the encryption policy 1, and encrypt the packet 5 by using the encryption policy 2. It may be understood that when a quantity of encryption policies is less than a quantity of packets in the traffic 1, the encryption policies may be cyclically used according to a sorting rule.

The following Example 2-2 describes a method for selecting an encryption policy for a packet according to an embodiment of this application. Example 2-2 corresponds to the foregoing description in which the network device 1 determines, according to the first rule, the encryption policy for each packet in the traffic 1 or the traffic 2 in the encryption policy group 1. Example 2-2 includes: For each packet in the received traffic 1, the network device 1 may randomly select an encryption policy for the packet from a plurality of encryption policies by using a random algorithm. That is, the network device 1 encrypts the packets in the traffic 1 by randomly using the encryption policies, and each encryption policy is used in a random order.

For each packet in the traffic 1, the network device 1 randomly selects an encryption policy from the encryption policy group 1 by using the random algorithm. In this way, disorder of selecting encryption policies for packets may be increased.

The packets and the encryption policies shown in Table 11 are also used as an example. Based on the random algorithm, the network device 1 randomly selects an encryption policy from the encryption policy 1, the encryption policy 2, and the encryption policy 3 for the packet 1, and randomly selects an encryption policy from the encryption policy 1, the encryption policy 2, and the encryption policy 3 for the packet 2. This process repeats. It may be understood that, if the network device 1 selects an encryption policy from a plurality of encryption policies for each packet by using the random algorithm, encryption policies for different packets may be the same. Certainly, the network device 1 may alternatively select an encryption policy by using a different random algorithm each time. Alternatively, if an encryption policy A has been selected, a set of to-be-selected encryption policies may not include the encryption policy A during next selection. This process repeats.

The following Example 2-3 describes a method for selecting an encryption policy for a packet according to an embodiment of this application. Example 2-3 corresponds to the foregoing description in which the network device 1 determines, according to the first rule, the encryption policy for each packet in the traffic 1 in the encryption policy group 1. The method includes: The network device 1 sequentially determines, in a sequence of the encryption policies in the encryption policy group 1, an encryption policy for every N (where N is greater than 1) packets in the packet 1 to a packet m.

That N is 2 and the traffic 1 includes the packet 1 to the packet 6 is used as an example. The network device 1 determines that the encryption policy 1 is for the packet 1 and the packet 2. The network device 1 determines that the encryption policy 2 is for the packet 3 and the packet 4. The network device 1 determines that the encryption policy 3 is for the packet 5 and the packet 6. This process repeats.

The following Example 2-4 describes a method for selecting an encryption policy for a packet by a network device according to an embodiment of this application. Example 2-4 corresponds to the foregoing description in which the network device 1 determines, according to the first rule, the encryption policy for each packet in the traffic 1 or the traffic 2 in the encryption policy group 1. The method includes: The network device 1 randomly selects, by using a random algorithm, a to-be-used encryption policy from the encryption policy 1 to the encryption policy 3 associated with the traffic 1. The network device 1 determines that the to-be-used encryption policy is for the 1^{st} packet to an N^{th} packet. Then, the network device 1 randomly selects a next encryption policy from the encryption policy 1 to the encryption policy 3 by using the random algorithm, and the network device 1 determines that the next encryption policy is for an (N+1)^{th} packet to a (2N+1)^{th} packet. This process repeats.

For example, the network device 1 randomly selects, by using the random algorithm, the encryption policy 2 from the encryption policy 1 to the encryption policy 3 to encrypt the packet 1 and the packet 2. Then, the network device 1 randomly selects, by using the random algorithm, the encryption policy 3 from the encryption policy 1 to the encryption policy 3 to encrypt the packet 3 and the packet 4. Finally, the network device 1 randomly selects, by using the random algorithm, the encryption policy 3 from the encryption policy 1 to the encryption policy 3 to encrypt the packet 5 and the packet 6.

It may be understood that, if the network device 1 randomly selects, by using the random algorithm, a to-be-used encryption policy 2 from the encryption policy 1 to the encryption policy 3 associated with the traffic 1 to encrypt the 1^{st} packet to the N^{th} packet, when the network device 1 uses the random algorithm again, the network device 1 may select a to-be-used encryption policy from the encryption policy 1 and the encryption policy 3 again to encrypt the (N+1)^{th} packet to the (2N+1)^{th} packet. This may prevent the same encryption policy from being selected for different packets when the random algorithm is used. N is a positive integer.

The following Example 2-5 describes a method for selecting an encryption policy for a packet by a network device according to an embodiment of this application. Example 2-5 corresponds to the foregoing description in which the network device 1 determines, according to the first rule, the encryption policy for each packet in the traffic 1 or the traffic 2 in the encryption policy group 1. The method includes: The network device 1 sequentially selects an encryption policy from the encryption policy 1 to the encryption policy 3 associated with the traffic 1, to encrypt a random quantity of packets.

For example, the network device 1 first encrypts P packets by using the encryption policy 1. P is randomly generated by the network device 1 by using a random algorithm, or P is a preset value. The network device 1 then encrypts L packets by using the encryption policy 2. L is randomly generated by the network device 1 by using the random algorithm again. The network device 1 then encrypts Q packets by using the encryption policy 3. Q is randomly generated by the network device 1 by using the random algorithm again. This process repeats until all packets of the traffic 1 are encrypted. Q is a positive integer.

The following Example 2-6 describes a method for selecting an encryption policy for a packet by a network device according to an embodiment of this application. Example 2-6 corresponds to the foregoing description in which the network device 1 determines, according to the first rule, the encryption policy for each packet in the traffic 1 in the encryption policy group 1. The method includes: The network device 1 determines, in a sequence of packets in the traffic 1, that an encryption policy randomly selected by the network device 1 from the encryption policy group 1 is for a random quantity of packets in the traffic 1.

That is, the network device 1 randomly selects a to-be-used encryption policy from the encryption policy group 1 each time to encrypt a random quantity of packets in the traffic 1, until all packets have corresponding encryption policies.

For example, the network device 1 randomly selects a to-be-used encryption policy 2 from the encryption policy 1 to the encryption policy 3 by using a random algorithm, and the network device 1 determines that the encryption policy 2 is for a random quantity of packets in the packet 1 to the packet m. Then, the network device 1 randomly selects a next encryption policy 3 by using the random algorithm, and the network device 1 determines that the encryption policy 3 is for a random quantity of packets in the packet 1 to the packet m. This process repeats until all packets of the traffic 1 are encrypted. It should be noted that packets randomly selected each time are different.

The following Example 2-7 describes a method for selecting an encryption policy for a packet by a network device according to an embodiment of this application. Example 2-7 corresponds to the foregoing description in which the network device 1 determines, according to the first rule, the encryption policy for each packet in the traffic 1 or the traffic 2 in the encryption policy group 1. The method includes: The network device 1 associates an encryption priority with each encryption policy in the encryption policy group 1. In addition, the network device 1 may determine an encryption policy for each packet based on an encryption priority corresponding to the packet in the traffic 1. The encryption priority is used to indicate an encryption priority of an encryption policy used for encrypting a packet.

For example, the encryption priority may include one or more levels, for example, a level 1, a level 2, and a level 3. For example, the level 1 may be a low level, the level 2 may be a medium level, and the level 3 may be a high level. Certainly, a "color" field may also be used to identify the encryption priority. For example, encryption priorities are classified to three levels: red, yellow, and green. It should be understood that, in this embodiment of this application, that encryption priorities include three levels is used as an example.

In a specific implementation, an encryption priority identifier corresponding to each packet may be a corresponding encryption priority identifier carried in the packet. The encryption priority identifier may be, for example, a priority identified by a DSCP field in an IP packet, or may be information carried in a separately set encryption priority field. The encryption priority corresponding to each packet may be associated with one or more encryption policies. Each encryption policy may alternatively be associated with one or more encryption priorities. For example, if an encryption priority corresponding to the packet 1 is 1, and encryption priorities associated with the encryption policy 1, the encryption policy 2, and the encryption policy 3 are all 1, the network device 1 may select a corresponding encryption policy for the packet 1 among the encryption policy 1 to the encryption policy 3. For another example, the encryption policy 1 may be associated with both an encryption priority 1 and an encryption priority 2. In this case, for another packet, for example, the packet 2, an encryption priority corresponding to the packet 2 is 2, and the packet 2 may also be encrypted by using the encryption policy 1.

If an encryption priority identifier 1 corresponding to the packet 1 in the traffic 1 indicates that an encryption priority of an encryption policy for encrypting the packet 1 is the level 1, and if an encryption priority associated with the encryption policy 1 is also 1, the network device 1 may encrypt the packet 1 by using the encryption policy 1.

For example, the network device 1 allocates, to traffic in an interface 1, a plurality of encryption policies with three levels: red, yellow, and green. The network device 1 sets a level of an encryption policy corresponding to each packet of the traffic 1. For example, an FTP protocol control channel packet is set to red, and an FTP protocol data channel packet is set to green. After the interface 1 receives a packet X, the network device identifies a "color" field in a packet header of the packet X. The network device 1 selects an encryption policy corresponding to the "color" field to encrypt the packet X. For example, if the "color" field is red, an encryption policy associated with red is selected for the packet X. For example, if the "color" field is yellow, an encryption policy associated with yellow is selected for the packet X. For example, if the "color" field is green, an encryption policy associated with green is selected for the packet X.

In another specific example, an encryption priority corresponding to each packet may be a statically configured encryption priority. For example, when packets forwarded in some interface ranges belong to same traffic, for example, packets forwarded through an interface 1, an interface 2, and an interface 3 belong to the same traffic, but an encryption priority associated with the packet forwarded through the interface 1 is the highest, an encryption priority associated with the packet forwarded through the interface 2 is the second highest, and an encryption priority associated with the packet forwarded through the interface 3 is the lowest, when receiving a packet that is in the traffic 1 and that is forwarded through the interface 1, the network device 1 selects, based on an encryption priority 1 associated with the interface 1, an encryption policy 1 corresponding to the encryption priority 1 to encrypt the packet that is in the traffic 1 and that is forwarded through the interface 1. Similarly, when receiving a packet that is in the traffic 1 and that is forwarded through the interface 2, the network device selects, based on an encryption priority 2 associated with the interface 2, an encryption policy 2 corresponding to the encryption priority 2 to encrypt the packet that is in the traffic 1 and that is forwarded through the interface 2. The rest may be deduced by analogy, and details are not described again. By statically configuring an encryption priority corresponding to a packet, packet encryption can be differentiated in detail according to a traffic differentiation rule and based on a packet granularity. In this way, secure communication is more flexible. For example, for a packet with a low security level, a low encryption priority may be configured for the packet. In this case, network overheads may be reduced. For a packet that requires a high security level, a high encryption priority may be configured for the packet, to improve security of packet transmission.

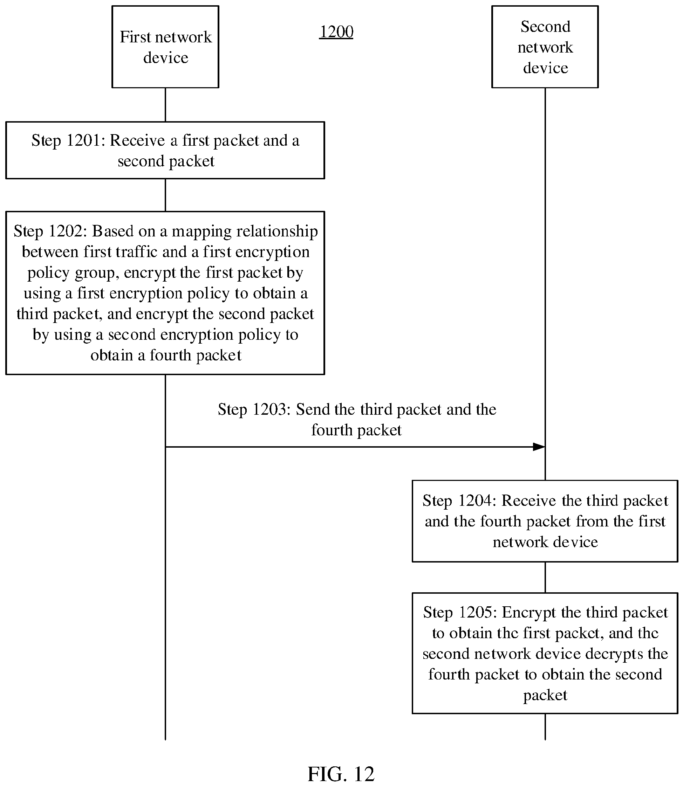

It should be noted that, if a plurality of encryption policies are used only by the traffic 1, encryption policies may be selected for the packet 1 to the packet m in the traffic 1 according to a method in the methods described in Example 2-1 to Example 2-7. Example 2-8: As shown in FIG. 12, a plurality of encryption policies between the network device 1 and the network device 2 in this embodiment of this application may be distributed on different paths. In other words, different encryption policies may correspond to a same path, or may correspond to different paths. When the encryption policies are distributed on different paths, it is difficult for an attacker to intercept all packets and costs increase. This may reduce the risk of cracking all packets and improves security.

With reference to FIG. 1, as shown in FIG. 12, there are four encryption policies between the network device 1 and the network device 2, to be specific, an encryption policy 1 to an encryption policy 4. The encryption policy 1 is associated with a path 1 (the network device 1→a network device 4→a network device 5→the network device 2). The encryption policy 2 and the encryption policy 3 are associated with a path 2 (the network device 1—The network device 5→the network device 2). The encryption policy 4 corresponds to a path 3 (the network device 1→a network device 6→a network device 7→the network device 2). The path of the encryption policy 1, the paths of the encryption policy 2 and the encryption policy 3, and the path of the encryption policy 4 are different. The paths of the encryption policy 2 and the encryption policy 3 are the same.

The following Example 2-8 describes a method for selecting an encryption policy for a packet by a network device according to an embodiment of this application. Example 2-8 corresponds to the foregoing description in which the network device 1 determines, according to the first rule, the encryption policy for each packet in the traffic 1 or the traffic 2 in the encryption policy group 1. The method includes: The network device 1 determines that the encryption policy for each packet in the traffic 1 is an encryption policy corresponding to a path of the packet.

Therefore, if the network device 1 sends the packet 1 to the network device 2 through the path 1, the network device 1 may encrypt the packet 1 by using the encryption policy 1 corresponding to the path 1. If the network device 1 sends the packet 12 to the network device 2 through the path 2, the network device 1 may encrypt the packet 2 by using the encryption policy 2 or the encryption policy 3 corresponding to the path 2. It should be noted that, if one path corresponds to two or more encryption policies, the network device 1 may select, randomly or in a sequence of the encryption policies, one encryption policy from the two or more encryption policies corresponding to the path to encrypt a packet transmitted through the path.

If a plurality of encryption policies are used by both the traffic 1 and the traffic 2, the network device 1 may specify that the plurality of encryption policies may be used by different traffic in the traffic 1 and the traffic 2 according to a method in the methods described in Example 2-1 to Example 2-8. Different traffic does not affect each other, and encryption policy selection of other traffic is not affected. Methods for using the different traffic may be the same or different. (2) The network device 1 considers all to-be-sent packets in the traffic 1 and the traffic 2 as a whole, and then selects, according to a method in the methods described in Example 2-1 to Example 2-8, a to-be-used encryption policy for each of all the to-be-sent packets in the traffic 1 and the traffic 2.

FIG. 12 is a schematic flowchart of a secure communication method 1200 according to an embodiment of this application. A network architecture to which the method 1200 is applied includes at least a first network device and a second network device. For example, the first network device may be the network device 1 shown in FIG. 1, and the second network device may be the network device 2 shown in FIG. 1. The method shown in FIG. 12 may specifically implement the method shown in any embodiment described with reference to FIG. 3 to FIG. 12. For example, the first network device and the second network device in FIG. 12 may be respectively the network device 1 and the network device 2 in the method 300 shown in FIG. 3. The method 1200 shown in FIG. 12 includes the following content.

Step 1201: The first network device receives a first packet and a second packet.

The first packet and the second packet belong to first traffic. All packets included in the first traffic match a first traffic differentiation rule.

For example, in the method shown in FIG. 12, the first packet corresponds to the packet 1 in FIG. 3, and the second packet corresponds to the packet 2 in FIG. 3. The first traffic corresponds to the traffic 1 in FIG. 3.

Step 1202: Based on a mapping relationship between the first traffic and a first encryption policy group, the first network device encrypts the first packet by using a first encryption policy to obtain a third packet, and encrypts the second packet by using a second encryption policy to obtain a fourth packet.

The first encryption policy group includes the second encryption policy and the first encryption policy, and the first encryption policy and the second encryption policy are different encryption policies.

For example, in the method shown in FIG. 12, the first encryption policy corresponds to the encryption policy 1 in FIG. 3, and the second encryption policy corresponds to the encryption policy 2 in FIG. 3. The first encryption policy group corresponds to the encryption policy group 1 in FIG. 3.

Step 1203: The first network device sends the third packet and the fourth packet to the second network device.

For example, in the method shown in FIG. 12, the third packet corresponds to the packet 1 encrypted by using the encryption policy 1 in FIG. 3, and the fourth packet corresponds to the packet 2 encrypted by using the encryption policy 2 in FIG. 3.

Step 1204: The second network device receives the third packet and the fourth packet from the first network device.

Step 1205: The second network device encrypts the third packet to obtain the first packet. The second network device decrypts the fourth packet to obtain the second packet.

This embodiment of this application provides a secure communication method. In the method, because there is a mapping relationship between the first traffic and the first encryption policy group, the first network device may encrypt different packets in the first traffic by using different encryption policies in the first encryption policy group, for example, encrypt the first packet in the first traffic by using the first encryption policy, and encrypt the second packet in the first traffic by using the second encryption policy. In this way, different packets in same traffic may be encrypted by using different encryption policies, thereby increasing a difficulty of cracking by an attacker and improving communication security.

In a specific implementation, the third packet carries a first encryption policy identifier. The fourth packet carries a second encryption policy identifier. The first encryption policy identifier is used by the second network device to identify that the third packet is a packet encrypted by using the first encryption policy. The second encryption policy identifier is used by the second network device to identify that the fourth packet is a packet encrypted by using the second encryption policy.

In this way, the second network device may determine, based on the first encryption policy identifier, an encryption policy for decrypting the third packet, so as to decrypt the third packet by using the encryption policy for decrypting the third packet, to obtain the first packet. The second network device may determine, based on the second encryption policy identifier, an encryption policy for decrypting the fourth packet, so as to decrypt the fourth packet by using the encryption policy for decrypting the fourth packet, to obtain the second packet.

In the method 1200, before step 1202, the method may further include: The first network device determines an encryption policy corresponding to each packet in the received first traffic in one of the following manners:

Manner 1: The first network device sequentially selects an encryption policy from the first encryption policy group in a sequence of encryption policies in the first encryption policy group, and sequentially determines an encryption policy for each packet in the received first traffic.

For example, for specific implementation of Manner 1, refer to Example 2-1. Details are not described herein again.

Manner 2: The first network device randomly selects an encryption policy from the first encryption policy group, and encrypts each packet in the received first traffic.

For example, for specific implementation of Manner 2, refer to Example 2-2. Details are not described herein again.

Manner 3: The first network device encrypts N packets in the first traffic by using the first encryption policy, and encrypts P packets other than the N packets in the first traffic by using the second encryption policy, where the N packets include the first packet, the P packets include the second packet, and N and P are positive integers.

For example, for specific implementation of Manner 3, refer to Example 2-3. Details are not described herein again.

When P is equal to N, P and N are specified values or preconfigured values, and the first encryption policy in the first encryption policy group is before the second encryption policy. For a specific implementation of Manner 3, refer to Example 2-3. Details are not described herein again.

When P is equal to N, and P and N are specified values or preconfigured values, the first encryption policy is randomly selected by the first network device from the first encryption policy group, and the second encryption policy is randomly selected by the first network device from the first encryption policy group. For specific implementation of Manner 3, refer to Example 2-4. Details are not described herein again.

When P and N are values randomly generated by the first network device, the first encryption policy in the first encryption policy group is before the second encryption policy. For a specific implementation of Manner 3, refer to Example 2-5. Details are not described herein again.

When P and N are values randomly generated by the first network device, the first encryption policy is randomly selected by the first network device from the first encryption policy group, and the second encryption policy is randomly selected by the first network device from the first encryption policy group. For specific implementation of Manner 3, refer to Example 2-6. Details are not described herein again.

In a specific implementation, an encryption priority of the first encryption policy is higher than an encryption priority of the second encryption policy.

For example, the encryption priorities may correspond to three levels: red, yellow, and green in the foregoing Example 2-7.

In a specific implementation, that based on the mapping relationship between the first traffic and the first encryption policy group, the first network device encrypts the first packet by using the first encryption policy to obtain the third packet, and encrypts the second packet by using the second encryption policy to obtain the fourth packet includes:

The first network device determines a first encryption priority corresponding to the first packet, and determines, based on an association relationship between the first encryption priority and the first encryption policy, to encrypt the first packet by using the first encryption policy to obtain the third packet.

The first network device determines a second encryption priority corresponding to the second packet, and determines, based on an association relationship between the second encryption priority and the second encryption policy, to encrypt the second packet by using the second encryption policy to obtain the fourth packet.

In a specific implementation, the first packet includes a first encryption priority identifier, and the first encryption priority identifier indicates the first encryption priority. An encryption priority of the first encryption policy corresponds to the first encryption priority. The second packet includes a second encryption priority identifier, and the second encryption priority identifier indicates the second encryption priority. An encryption priority of the second encryption policy corresponds to the second encryption priority. In a specific implementation, that the first network device sends the third packet and the fourth packet to the second network device includes: The first network device sends the third packet to the second network device through a first path, and sends the fourth packet to the second network device through a second path, where the first path is associated with the first encryption policy, and the second path is associated with the second encryption policy.

For example, the first path may correspond to the path 1 in FIG. 12. The second path may correspond to the path 2 in FIG. 12.

In the method 1200, before step 1202, the method further includes: The first network device creates the first encryption policy group. For a specific implementation in which the first network device creates the first encryption policy group, refer to the foregoing method 500.

In a specific implementation, that the first network device creates the first encryption policy group includes:
(a) The first network device obtains a plurality of second public keys of the second network device.
(b) The first network device obtains policy information associated with each of the plurality of second public keys, where the policy information includes key exchange method information and encryption algorithm information.
(c) The first network device creates the first encryption policy group based on the plurality of second public keys and the policy information associated with each of the plurality of second public keys.

In a specific implementation, that the first network device obtains a plurality of second public keys of the second network device includes: The first network device obtains the plurality of second public keys by using a third network device.

In a specific implementation, that the first network device obtains policy information associated with each of the plurality of second public keys includes: The first network device locally obtains the policy information associated with each second public key; or
the first network device receives, by using the third network device, the policy information associated with each second public key.

In a specific implementation, that the first network device obtains a plurality of second public keys of the second network device and that the first network device obtains policy information associated with each of the plurality of second public keys include:
The first network device obtains at least one first public key group and policy information associated with each of the at least one first public key group, where the at least one first public key group includes the plurality of second public keys.

In a specific implementation, that the first network device creates the first encryption policy group based on the plurality of second public keys and the policy information associated with each second public key includes: The first network device determines n1 public-private key pairs associated with first policy information, where the first policy information includes key exchange method information and encryption algorithm information. The first network device determines n2 public keys that are in the plurality of second public keys and that are associated with the first policy information. The first network device generates the first encryption policy group based on the n1 public-private key pairs, the n2 public keys, and the first policy information, where the first encryption policy group includes n1×n2 encryption policies, and n1 and n2 are positive integers greater than 1.

In a specific implementation, that the first network device creates the first encryption policy group based on the plurality of second public keys and the policy information associated with each second public key includes: Policy information associated with a Y^{th} first public-private key pair in a first public-private key pair list is the same as policy information associated with a Y^{th} second public key in the plurality of second public keys, and the first network device generates an encryption policy based on the Y^{th} first public-private key pair and the Y^{th} second public key, where Y is an integer greater than or equal to 1.

The method in the method 1200 further includes the following steps.

(d) The first network device receives second traffic, where the second traffic includes a fifth packet and a sixth packet, and all packets included in the second traffic match a second traffic differentiation rule.

(e) Based on a mapping relationship between the second traffic and the first encryption policy group, the first network device encrypts the fifth packet and the sixth packet by using corresponding encryption policies in the first encryption policy group. The first network device sends an encrypted fifth packet and an encrypted sixth packet to the second network device.

When the method 1200 shown in FIG. 12 is used to implement the method corresponding to any one of FIG. 3 to FIG. 12, the first traffic and the second traffic may correspond, for example, to the traffic 1 and the traffic 2 that are described in the foregoing method embodiments. The first traffic differentiation rule and the second traffic differentiation rule may correspond, for example, to the traffic differentiation rule 1 and the traffic differentiation rule 2 that are described in the foregoing method embodiments. For specific descriptions of the first traffic, the second traffic, the first traffic differentiation rule, and the first traffic differentiation rule, and specific implementations of steps in the method 1200, refer to related descriptions of corresponding steps in the foregoing method embodiments. Details are not described herein again.

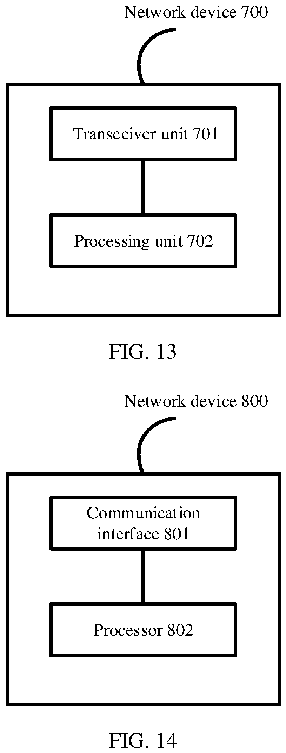

With reference to FIG. 13, the following describes a network device 700 according to an embodiment of this application. The network device 700 may be applied to the network architecture shown in FIG. 1. For example, the network device 700 may be the network device 1 or the network device 2 in this application, and is configured to perform the method in the embodiment corresponding to any one of FIG. 3 to FIG. 12. Alternatively, the network device 700 may be the first network device or the second network device in this application, and is configured to perform the method corresponding to FIG. 12. The network device 700 includes a transceiver unit 701 and a processing unit 702. The transceiver unit 701 is configured to perform a sending and receiving operation, and the processing unit is configured to perform an operation other than sending and receiving. For example, when the network device 700 is used as the first network device to perform the method 1200 shown in FIG. 12, the transceiver unit 701 may receive a first packet and a second packet, where the first packet and the second packet belong to first traffic, and all packets included in the first traffic match a first traffic differentiation rule. Based on a mapping relationship between the first traffic and a first encryption policy group, the processing unit 702 may be configured to: encrypt the first packet by using a first encryption policy to obtain a third packet, and encrypt the second packet by using a second encryption policy to obtain a fourth packet, where the first encryption policy group includes the second encryption policy and the first encryption policy, and the first encryption policy and the second encryption policy are different encryption policies. The transceiver unit 701 is further configured to send the third packet and the fourth packet to a second network device.

For example, when the network device 700 is used as the first network device to perform the method 1200 shown in FIG. 12, the transceiver unit 701 may receive the third packet and the fourth packet. The processing unit 702 may be configured to encrypt the third packet to obtain the first packet. The second network device decrypts the fourth packet to obtain the second packet.

With reference to FIG. 14, the following describes another network device 800 according to an embodiment of this application. The network device 800 may be applied to the network architecture shown in FIG. 1. For example, the network device 800 may be the network device 1 or the network device 2 in this application, and is configured to perform an operation performed by the network device 1 or the network device 2 in the method in the embodiment corresponding to any one of FIG. 3 to FIG. 12. Alternatively, the network device 800 may be the first network device or the second network device in this application, and performs an operation performed by the first network device or the second network device in the method corresponding to FIG. 12. The network device 800 includes a communication interface 801 and a processor 802 connected to the communication interface. The communication interface 801 is configured to perform a sending and receiving operation, and the processor 802 is configured to perform an operation other than sending and receiving. For example, when the network device 800 is used as the first network device to perform the method 1200 shown in FIG. 12, the communication interface 801 may receive a first packet and a second packet, where the first packet and the second packet belong to first traffic, and all packets included in the first traffic match a first traffic differentiation rule. Based on a mapping relationship between the first traffic and a first encryption policy group, the processor 802 may be configured to: encrypt the first packet by using a first encryption policy to obtain a third packet, and encrypt the second packet by using a second encryption policy to obtain a fourth packet, where the first encryption policy group includes the second encryption policy and the first encryption policy, and the first encryption policy and the second encryption policy are different encryption policies. The communication interface 801 is further configured to send the third packet and the fourth packet to a second network device.

For example, when the network device 800 is used as the first network device to perform the method 1200 shown in FIG. 12, the communication interface 801 may receive the third packet and the fourth packet. The processor 802 may be configured to encrypt the third packet to obtain the first packet. The second network device decrypts the fourth packet to obtain the second packet.

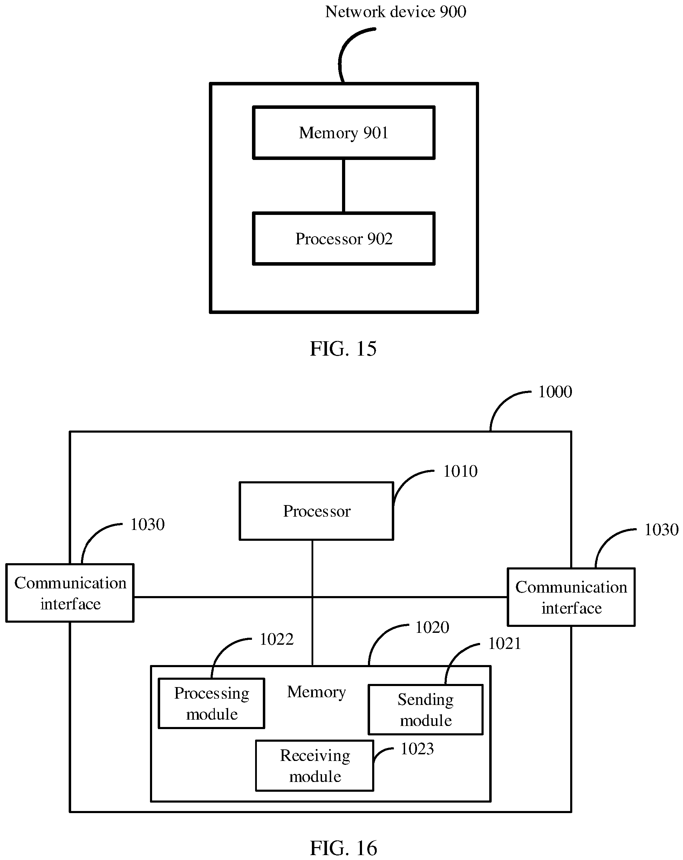

With reference to FIG. 15, the following describes another network device 900 according to an embodiment of this application. The network device 900 may be applied to the network architecture shown in FIG. 1. For example, the network device 900 may be the network device 1 or the network device 2 in this application, and is configured to perform an operation performed by the network device 1 or the network device 2 in the method in the embodiment corresponding to any one of FIG. 3 to FIG. 12. Alternatively, the network device 900 may be the first network device or the second network device in this application, and performs an operation performed by the first network device or the second network device in the method corresponding to FIG. 12. The network device 900 includes a memory 901 and a processor 902 connected to the memory. The memory 901 stores instructions, and the processor 902 reads the instructions, so that the network device 900 performs the method performed by the network device 1 or the network device 2 in the embodiment corresponding to any one of FIG. 3 to FIG. 12, and the latter performs the method performed by the first network device or the second network device in the embodiment corresponding to FIG. 12.

With reference to FIG. 16, the following describes another network device 1000 according to an embodiment of this application. The network device 1000 may be applied to the network architecture shown in FIG. 1. For example, the network device 1000 may be the network device 1 or the network device 2 in this application, and is configured to perform an operation performed by the network device 1 or the network device 2 in the method in the embodiment corresponding to any one of FIG. 3 to FIG. 12. Alternatively, the network device 1000 may be the first network device or the second network device in this application, and performs an operation performed by the first network device or the second network device in the method corresponding to FIG. 12. As shown in FIG. 16, the network device 1000 includes a processor 1010, a memory 1020 coupled to the processor, and a communication interface 1030. In a specific implementation, the memory 1020 stores computer-readable instructions, and the computer-readable instructions include a plurality of software modules, for example, a sending module 1021, a processing module 1022, and a receiving module 1023. After executing each software module, the processor 1010 may perform a corresponding operation based on an indication of each software module. In this embodiment, an operation performed by a software module is actually the operation performed by the processor 1010 based on the indication of the software module. For example, when the network device 1000 is used as the first network device to perform the method shown in FIG. 12, the sending module 1021 is configured to receive a first packet and a second packet, where the first packet and the second packet belong to first traffic, and all packets included in the first traffic match a first traffic differentiation rule. Based on a mapping relationship between the first traffic and a first encryption policy group, the processing module 1022 is configured to: encrypt the first packet by using a first encryption policy to obtain a third packet, and encrypt the second packet by using a second encryption policy to obtain a fourth packet, where the first encryption policy group includes the second encryption policy and the first encryption policy, and the first encryption policy and the second encryption policy are different encryption policies. In addition, after executing the computer-readable instructions in the memory 1020, the processor 1010 may perform, based on indications of the computer-readable instructions, all operations that can be performed by the network device 1, the network device 2, the first network device, or the second network device. For example, when serving as the network device 1 or the network device 2, the network device 1000 may separately perform all operations performed by the network device 1 or the network device 2 in embodiments corresponding to FIG. 3 to FIG. 12. When serving as the first network device or the second network device, the network device 1000 may separately perform all operations performed by the first network device or the second network device in the embodiment corresponding to FIG. 12.

The processor in this application may be a central processing unit (English: central processing unit, CPU for short), a network processor (English: network processor, NP for short), or a combination of the CPU and the NP. Alternatively, the processor may be an application-specific integrated circuit (English: application-specific integrated circuit, ASIC for short), a programmable logic device (English: programmable logic device, PLD for short), or a combination thereof. The PLD may be a complex programmable logic device (English: complex programmable logic device, CPLD for short), a field programmable gate array (English: field programmable gate array, FPGA for short), generic array logic (English: generic array logic, GAL for short), or any combination thereof. The processor 1010 may be one processor, or may include a plurality of processors. The memory in this application may be a volatile memory (English: volatile memory) such as a random access memory (English: random access memory, RAM for short); a non-volatile memory (English: non-volatile memory) such as a read-only memory (English: read-only memory, ROM for short), a flash memory (English: flash memory), a hard disk drive (English: hard disk drive, HDD for short), or a solid-state drive (English: solid-state drive, SSD for short), or a combination of the foregoing types of memories. The memory may be one memory, or may include a plurality of memories.

An embodiment of this application further provides a communication system, including a first network device and a second network device. The first network device and the second network device may be the network device in any one of FIG. 13 to FIG. 15, and are configured to perform the method in any one of embodiments corresponding to FIG. 1 to FIG. 12.

This application further provides a computer program product, including a computer program. When the computer program is run on a computer, the computer is enabled to perform the method performed by the network device 1 and/or the network device 2 in any one of embodiments corresponding to FIG. 1 to FIG. 12.

This application further provides a computer program product, including a computer program. When the computer program is run on a computer, the computer is enabled to perform the method performed by the first network device and/or the second network device in the embodiment corresponding to FIG. 12.

This application provides a computer-readable storage medium, including computer instructions. When the computer instructions are run on a computer, the computer is enabled to perform the method performed by the network device 1 and/or the network device 2 in any one of embodiments corresponding to FIG. 1 to FIG. 11.

This application provides a computer-readable storage medium, including computer instructions. When the computer instructions are run on a computer, the computer is enabled to perform the method performed by the first network device and/or the second network device in the embodiment corresponding to FIG. 12.

A person of ordinary skill in the art may be aware that modules and method operations in the examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application.

It may be clearly understood by a person skilled in the art that, for the purpose of convenient and brief description, for a detailed working process of the foregoing system, apparatus, and module, refer to a corresponding process in the foregoing method embodiments. Details are not described herein again.

All or some of the foregoing embodiments may be implemented through hardware, firmware, or any combination thereof. When software is involved in a specific implementation process, the software may be completely or partially embodied in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape) an optical medium (for example, a DVD), a semiconductor medium (for example, a solid-state drive Solid-State Drive (SSD)), or the like.

All parts in this specification are described in a progressive manner. For same or similar parts in the implementations, mutual reference may be made. Each implementation focuses on a difference from other implementations. Especially, apparatus and system embodiments are basically similar to a method embodiment, and therefore are described briefly; for related parts, refer to partial descriptions in the method embodiment.

## Claims

1. A secure communication method, wherein the method comprises:
receiving, by a first network device (700; 800; 900; 1000), a first packet and a second packet, wherein the first packet and the second packet belong to first traffic, and all packets comprised in the first traffic match a first traffic differentiation rule;
based on a mapping relationship between the first traffic and a first encryption policy group, encrypting, by the first network device (700; 800; 900; 1000), the first packet by using a first encryption policy to obtain a third packet, and encrypting the second packet by using a second encryption policy to obtain a fourth packet, wherein the first encryption policy group comprises the first encryption policy and the second encryption policy, and the first encryption policy and the second encryption policy are different encryption policies; and
sending, by the first network device (700; 800; 900; 1000), the third packet and the fourth packet to a second network device (700; 800; 900; 1000),
**characterized by**
obtaining, by the first network device (700; 800; 900; 1000), a plurality of second public keys of the second network device (700; 800; 900; 1000);
obtaining, by the first network device (700; 800; 900; 1000), policy information associated with each of the plurality of second public keys, wherein the policy information comprises key exchange method information and encryption algorithm information; and
creating, by the first network device (700; 800; 900; 1000), the first encryption policy group based on the plurality of second public keys and the policy information associated with each of the plurality of second public keys.

2. The method according to claim 1, wherein the method further comprises:
determining, by the first network device (700; 800; 900; 1000), an encryption policy corresponding to each packet in the received first traffic in one of the following manners:
manner 1: sequentially selecting, by the first network device (700; 800; 900; 1000), an encryption policy from the first encryption policy group in a sequence of encryption policies in the first encryption policy group, and encrypting each packet in the received first traffic;
manner 2: when receiving a packet in the first traffic, randomly selecting, by the first network device (700; 800; 900; 1000), an encryption policy from the first encryption policy group, and encrypting the received packet; and
manner 3: encrypting, by the first network device (700; 800; 900; 1000), N packets in the first traffic by using the first encryption policy, and encrypting P packets in the first traffic by using the second encryption policy, wherein the N packets comprise the first packet, the P packets comprise the second packet, and N and P are positive integers.

3. The method according to claim 1 or 2, wherein the based on the mapping relationship between the first traffic and the first encryption policy group, encrypting, by the first network device (700; 800; 900; 1000), the first packet by using a first encryption policy to obtain a third packet, and encrypting the second packet by using a second encryption policy to obtain a fourth packet comprises:
determining, by the first network device (700; 800; 900; 1000), a first encryption priority corresponding to the first packet, and determining, based on an association relationship between the first encryption priority and the first encryption policy, to encrypt the first packet by using the first encryption policy to obtain the third packet; and
determining, by the first network device (700; 800; 900; 1000), a second encryption priority corresponding to the second packet, and determining, based on an association relationship between the second encryption priority and the second encryption policy, to encrypt the second packet by using the second encryption policy to obtain the fourth packet.

4. The method according to claim 3, wherein the first packet comprises a first encryption priority identifier, and the first encryption priority identifier is used to indicate the first encryption priority; and the second packet comprises a second encryption priority identifier, and the second encryption priority identifier is used to indicate the second encryption priority.

5. The method according to any one of claims 1 to 4, wherein the sending, by the first network device (700; 800; 900; 1000), the third packet and the fourth packet to a second network device (700; 800; 900; 1000) comprises:
sending, by the first network device (700; 800; 900; 1000), the third packet to the second network device (700; 800; 900; 1000) through a first path, and sending the fourth packet to the second network device (700; 800; 900; 1000) through a second path, wherein the first path is associated with the first encryption policy, and the second path is associated with the second encryption policy.

6. The method according to any one of claims 1 to 5, wherein the method further comprises:
receiving, by the first network device (700; 800; 900; 1000), second traffic, wherein the second traffic comprises a fifth packet and a sixth packet, all packets comprised in the second traffic match a second traffic differentiation rule, and the first traffic differentiation rule is different from the second traffic differentiation rule;
based on a mapping relationship between the second traffic and the first encryption policy group, encrypting, by the first network device (700; 800; 900; 1000), the fifth packet and the sixth packet by using corresponding encryption policies in the first encryption policy group; and
sending, by the first network device (700; 800; 900; 1000), an encrypted fifth packet and an encrypted sixth packet to the second network device (700; 800; 900; 1000).

7. A first network device (900; 1000), comprising:
a memory (901; 1020) storing instructions; and
a processor (901; 1010) communicating with the memory (901; 1020), wherein the processor (901; 1010) executes the instructions, to enable the first network device (700; 800; 900; 1000) to perform the method according to any one of claims 1 to 6.

8. A secure communication method, wherein the method comprises:
receiving, by a second network device (700; 800; 900; 1000), a third packet and a fourth packet from a first network device (700; 800; 900; 1000);
decrypting, by the second network device (700; 800; 900; 1000), the third packet by using a first encryption policy corresponding to the third packet to obtain a first packet; and
decrypting, by the second network device (700; 800; 900; 1000), the fourth packet by using a second encryption policy corresponding to the fourth packet to obtain a second packet, wherein the first encryption policy and the second encryption policy correspond to a first encryption policy group, and wherein the first encryption policy and the second encryption policy are different encryption policies;
**characterized by**:
sending, by the second network device (700; 800; 900; 1000), a plurality of second public keys of the second network device (700; 800; 900; 1000) to the first network device (700; 800; 900; 1000) in order to allow the first network device (700; 800; 900; 1000) to create the first encryption policy group based on the plurality of second public keys and a policy information associated with each of the plurality of second public keys, wherein the policy information comprises key exchange method information and encryption algorithm information.

9. The method according to claim 8, wherein the third packet carries a first encryption policy identifier, and the first encryption policy identifier indicates that the third packet is a packet encrypted by using the first encryption policy.

10. The method according to claim 8 or 9, wherein the fourth packet carries a second encryption policy identifier, and the second encryption policy identifier indicates that the fourth packet is a packet encrypted by using the second encryption policy.

11. The method according to any one of claims 8 to 10, wherein the second network device (700; 800; 900; 1000) determines, based on a first encrypted packet carried in the third packet, to decrypt the third packet by using the first encryption policy.

12. The method according to any one of claims 8 to 11, wherein the second network device (700; 800; 900; 1000) determines, based on a second encrypted packet carried in the fourth packet, to decrypt the fourth packet by using the second encryption policy.

13. A second network device (700; 800; 900; 1000), comprising:
a memory (901; 1020) storing instructions; and
a processor (901; 1010) communicating with the memory (901; 1020), wherein the processor (901; 1010) executes the instructions, to enable the second network device (700; 800; 900; 1000) to perform the method according to any one of claims 8 to 12.

## Patentansprüche

1. Verfahren für sichere Kommunikation, wobei das Verfahren Folgendes umfasst:
Empfangen, durch eine erste Netzvorrichtung (700; 800; 900; 1000), eines ersten Pakets und eines zweiten Pakets, wobei das erste Paket und das zweite Paket zu erstem Verkehr gehören und alle Pakete, die in dem ersten Verkehr umfasst sind, eine erste Verkehrsdifferenzierungsregel erfüllen;
basierend auf einer Zuordnungsbeziehung zwischen dem ersten Verkehr und einer ersten Verschlüsselungsrichtliniengruppe Verschlüsseln, durch die erste Netzvorrichtung (700; 800; 900; 1000), des ersten Pakets unter Verwendung einer ersten Verschlüsselungsrichtlinie, um ein drittes Paket zu erlangen, und Verschlüsseln des zweiten Pakets unter Verwendung einer zweiten Verschlüsselungsrichtlinie, um ein viertes Paket zu erlangen, wobei die erste Verschlüsselungsrichtliniengruppe die erste Verschlüsselungsrichtlinie und die zweite Verschlüsselungsrichtlinie umfasst und die erste Verschlüsselungsrichtlinie und die zweite Verschlüsselungsrichtlinie unterschiedliche Verschlüsselungsrichtlinien sind; und
Senden, durch die erste Netzvorrichtung (700; 800; 900; 1000), des dritten Pakets und des vierten Pakets an eine zweite Netzvorrichtung (700; 800; 900; 1000),
**gekennzeichnet durch**
Erlangen, durch die erste Netzvorrichtung (700; 800; 900; 1000), einer Vielzahl zweiter öffentlicher Schlüssel der zweiten Netzvorrichtung (700; 800; 900; 1000);
Erlangen, durch die erste Netzvorrichtung (700; 800; 900; 1000), von Richtlinieninformationen, die mit jedem der Vielzahl zweiter öffentlicher Schlüssel assoziiert sind, wobei die Richtlinieninformationen Schlüsselaustauschverfahrensinformationen und Verschlüsselungsalgorithmusinformationen umfassen; und
Erstellen, durch die erste Netzvorrichtung (700; 800; 900; 1000), der ersten Verschlüsselungsrichtliniengruppe basierend auf der Vielzahl zweiter öffentlicher Schlüssel und den Richtlinieninformationen, die mit jedem der Vielzahl zweiter öffentlicher Schlüssel assoziiert sind.

2. Verfahren nach Anspruch 1, wobei das Verfahren ferner Folgendes umfasst:
Bestimmen, durch die erste Netzvorrichtung (700; 800; 900; 1000), einer Verschlüsselungsrichtlinie, die jedem Paket in dem empfangenen ersten Verkehr in einer der folgenden Weisen entspricht:
Weise 1: sequenzielles Auswählen, durch die erste Netzvorrichtung (700; 800; 900; 1000), einer Verschlüsselungsrichtlinie aus der ersten Verschlüsselungsrichtliniengruppe in einer Sequenz von Verschlüsselungsrichtlinien in der ersten Verschlüsselungsrichtliniengruppe und Verschlüsseln jedes Pakets in dem empfangenen ersten Verkehr;
Weise 2: bei Empfangen eines Pakets in dem ersten Verkehr zufälliges Auswählen, durch die erste Netzvorrichtung (700; 800; 900; 1000), einer Verschlüsselungsrichtlinie aus der ersten Verschlüsselungsrichtliniengruppe und Verschlüsseln des empfangenen Pakets; und
Weise 3: Verschlüsseln, durch die erste Netzvorrichtung (700; 800; 900; 1000), von N Paketen in dem ersten Verkehr unter Verwendung der ersten Verschlüsselungsrichtlinie und Verschlüsseln von P Paketen in dem ersten Verkehr unter Verwendung der zweiten Verschlüsselungsrichtlinie, wobei die N Pakete das erste Paket umfassen, die P Pakete das zweite Paket umfassen und N und P positive Ganzzahlen sind.

3. Verfahren nach Anspruch 1 oder 2, wobei das Verschlüsseln basierend auf der Zuordnungsbeziehung zwischen dem ersten Verkehr und der ersten Verschlüsselungsrichtliniengruppe, durch die erste Netzvorrichtung (700; 800; 900; 1000), des ersten Pakets unter Verwendung einer ersten Verschlüsselungsrichtlinie, um ein drittes Paket zu erlangen, und Verschlüsseln des zweiten Pakets unter Verwendung einer zweiten Verschlüsselungsrichtlinie, um ein viertes Paket zu erlangen, Folgendes umfasst:
Bestimmen, durch die erste Netzvorrichtung (700; 800; 900; 1000), einer ersten Verschlüsselungspriorität, die dem ersten Paket entspricht, und Bestimmen, basierend auf einer Assoziierungsbeziehung zwischen der ersten Verschlüsselungspriorität und der ersten Verschlüsselungsrichtlinie, das erste Paket unter Verwendung der ersten Verschlüsselungsrichtlinie zu verschlüsseln, um das dritte Paket zu erlangen; und
Bestimmen, durch die erste Netzvorrichtung (700; 800; 900; 1000), einer zweiten Verschlüsselungspriorität, die dem zweiten Paket entspricht, und Bestimmen, basierend auf einer Assoziierungsbeziehung zwischen der zweiten Verschlüsselungspriorität und der zweiten Verschlüsselungsrichtlinie, das zweite Paket unter Verwendung der zweiten Verschlüsselungsrichtlinie zu verschlüsseln, um das vierte Paket zu erlangen.

4. Verfahren nach Anspruch 3, wobei das erste Paket eine erste Verschlüsselungsprioritätskennung umfasst und die erste Verschlüsselungsprioritätskennung dazu verwendet wird, die erste Verschlüsselungspriorität anzugeben; und das zweite Paket eine zweite Verschlüsselungsprioritätskennung umfasst und die zweite Verschlüsselungsprioritätskennung dazu verwendet wird, die zweite Verschlüsselungspriorität anzugeben.

5. Verfahren nach einem der Ansprüche 1 bis 4, wobei das Senden, durch die erste Netzvorrichtung (700; 800; 900; 1000), des dritten Pakets und des vierten Pakets an eine zweite Netzvorrichtung (700; 800; 900; 1000) Folgendes umfasst:
Senden, durch die erste Netzvorrichtung (700; 800; 900; 1000), des dritten Pakets an die zweite Netzvorrichtung (700; 800; 900; 1000) über einen ersten Pfad und Senden des vierten Pakets an die zweite Netzvorrichtung (700; 800; 900; 1000) über einen zweiten Pfad, wobei der erste Pfad mit der ersten Verschlüsselungsrichtlinie assoziiert ist und der zweite Pfad mit der zweiten Verschlüsselungsrichtlinie assoziiert ist.

6. Verfahren nach einem der Ansprüche 1 bis 5, wobei das Verfahren ferner Folgendes umfasst:
Empfangen, durch die erste Netzvorrichtung (700; 800; 900; 1000), zweiten Verkehrs, wobei der zweite Verkehr ein fünftes Paket und ein sechstes Paket umfasst, alle Pakete, die in dem zweiten Verkehr umfasst sind, eine zweite Verkehrsdifferenzierungsregel erfüllen und sich die erste Verkehrsdifferenzierungsregel von der zweiten Verkehrsdifferenzierungsregel unterscheidet;
basierend auf einer Zuordnungsbeziehung zwischen dem zweiten Verkehr und der ersten Verschlüsselungsrichtliniengruppe Verschlüsseln, durch die erste Netzvorrichtung (700; 800; 900; 1000), des fünften Pakets und des sechsten Pakets unter Verwendung entsprechender Verschlüsselungsrichtlinien in der ersten Verschlüsselungsrichtliniengruppe; und
Senden, durch die erste Netzvorrichtung (700; 800; 900; 1000), eines verschlüsselten fünften Pakets und eines verschlüsselten sechsten Pakets an die zweite Netzvorrichtung (700; 800; 900; 1000).

7. Erste Netzvorrichtung (900; 1000), umfassend:
einen Speicher (901; 1020), der Anweisungen speichert; und
einen Prozessor (901; 1010), der mit dem Speicher (901; 1020) kommuniziert, wobei der Prozessor (901; 1010) die Anweisungen ausführt, um es der ersten Netzvorrichtung (700; 800; 900; 1000) zu ermöglichen, das Verfahren nach einem der Ansprüche 1 bis 6 durchzuführen.

8. Verfahren für sichere Kommunikation, wobei das Verfahren Folgendes umfasst:
Empfangen, durch eine zweite Netzvorrichtung (700; 800; 900; 1000), eines dritten Pakets und eines vierten Pakets von einer ersten Netzvorrichtung (700; 800; 900; 1000);
Entschlüsseln, durch die zweite Netzvorrichtung (700; 800; 900; 1000), des dritten Pakets unter Verwendung einer ersten Verschlüsselungsrichtlinie, die dem dritten Paket entspricht, um ein erstes Paket zu erlangen; und
Entschlüsseln, durch die zweite Netzvorrichtung (700; 800; 900; 1000), des vierten Pakets unter Verwendung einer zweiten Verschlüsselungsrichtlinie, die dem vierten Paket entspricht, um ein zweites Paket zu erlangen, wobei die erste Verschlüsselungsrichtlinie und die zweite Verschlüsselungsrichtlinie einer ersten Verschlüsselungsrichtliniengruppe entsprechen und wobei die erste Verschlüsselungsrichtlinie und die zweite Verschlüsselungsrichtlinie unterschiedliche Verschlüsselungsrichtlinien sind;
**gekennzeichnet durch**:
Senden, durch die zweite Netzvorrichtung (700; 800; 900; 1000), einer Vielzahl zweiter öffentlicher Schlüssel der zweiten Netzvorrichtung (700; 800; 900; 1000) an die erste Netzvorrichtung (700; 800; 900; 1000), um es der ersten Netzvorrichtung (700; 800; 900; 1000) zu ermöglichen, die erste Verschlüsselungsrichtliniengruppe basierend auf der Vielzahl zweiter öffentlicher Schlüssel und Richtlinieninformationen, die mit jedem der Vielzahl zweiter öffentlicher Schlüssel assoziiert sind, zu erstellen, wobei die Richtlinieninformationen Schlüsselaustauschverfahrensinformationen und Verschlüsselungsalgorithmusinformationen umfassen.

9. Verfahren nach Anspruch 8, wobei das dritte Paket eine erste Verschlüsselungsrichtlinienkennung enthält und die erste Verschlüsselungsrichtlinienkennung angibt, dass das dritte Paket ein Paket ist, das unter Verwendung der ersten Verschlüsselungsrichtlinie verschlüsselt ist.

10. Verfahren nach Anspruch 8 oder 9, wobei das vierte Paket eine zweite Verschlüsselungsrichtlinienkennung enthält und die zweite Verschlüsselungsrichtlinienkennung angibt, dass das vierte Paket ein Paket ist, das unter Verwendung der zweiten Verschlüsselungsrichtlinie verschlüsselt ist.

11. Verfahren nach einem der Ansprüche 8 bis 10, wobei die zweite Netzvorrichtung (700; 800; 900; 1000) basierend auf einem ersten verschlüsselten Paket, das in dem dritten Paket enthalten ist, bestimmt, das dritte Paket unter Verwendung der ersten Verschlüsselungsrichtlinie zu entschlüsseln.

12. Verfahren nach einem der Ansprüche 8 bis 11, wobei die zweite Netzvorrichtung (700; 800; 900; 1000) basierend auf einem zweiten verschlüsselten Paket, das in dem vierten Paket enthalten ist, bestimmt, das vierte Paket unter Verwendung der zweiten Verschlüsselungsrichtlinie zu entschlüsseln.

13. Zweite Netzvorrichtung (700; 800; 900; 1000), umfassend:
einen Speicher (901; 1020), der Anweisungen speichert; und
einen Prozessor (901; 1010), der mit dem Speicher (901; 1020) kommuniziert, wobei der Prozessor (901; 1010) die Anweisungen ausführt, um es der zweiten Netzvorrichtung (700; 800; 900; 1000) zu ermöglichen, das Verfahren nach einem der Ansprüche 8 bis 12 durchzuführen.

## Revendications

1. Procédé de communication sécurisée, dans lequel le procédé comprend :
le fait de recevoir, par un premier dispositif réseau (700 ; 800 ; 900 ; 1000), un premier paquet et un deuxième paquet, dans lequel le premier paquet et le deuxième paquet appartiennent au premier trafic, et tous les paquets compris dans le premier trafic correspondent à une première règle de différenciation du trafic ;
en fonction d'une relation de mappage entre le premier trafic et un premier groupe de politiques de chiffrement, le fait de chiffrer, par le premier dispositif réseau (700 ; 800 ; 900 ; 1000), le premier paquet en utilisant une première politique de chiffrement pour obtenir un troisième paquet, et le fait de chiffrer le deuxième paquet en utilisant une seconde politique de chiffrement pour obtenir un quatrième paquet, dans lequel le premier groupe de politiques de chiffrement comprend la première politique de chiffrement et la seconde politique de chiffrement, et la première politique de chiffrement et la seconde politique de chiffrement sont des politiques de chiffrement différentes ; et
le fait d'envoyer, par le premier dispositif réseau (700 ; 800 ; 900 ; 1000), le troisième paquet et le quatrième paquet à un second dispositif réseau (700 ; 800 ; 900 ; 1000),
**caractérisé par**
le fait d'obtenir, par le premier dispositif réseau (700 ; 800 ; 900 ; 1000), une pluralité de secondes clés publiques du second dispositif réseau (700 ; 800 ; 900 ; 1000) ;
le fait d'obtenir, par le premier dispositif réseau (700 ; 800 ; 900 ; 1000), des informations de politique associées à chacune de la pluralité de secondes clés publiques, dans lequel les informations de politique comprennent des informations sur le procédé d'échange de clés et des informations sur l'algorithme de chiffrement ; et
le fait de créer, par le premier dispositif réseau (700 ; 800 ; 900 ; 1000), le premier groupe de politiques de chiffrement en fonction de la pluralité de secondes clés publiques et des informations de politique associées à chacune de la pluralité de secondes clés publiques.

2. Procédé selon la revendication 1, dans lequel le procédé comprend également :
le fait de déterminer, par le premier dispositif réseau (700 ; 800 ; 900 ; 1000), une politique de chiffrement correspondant à chaque paquet dans le premier trafic reçu de l'une des manières suivantes :
manière 1 : sélectionner séquentiellement, par le premier dispositif réseau (700 ; 800 ; 900 ; 1000), une politique de chiffrement du premier groupe de politiques de chiffrement dans une séquence de politiques de chiffrement dans le premier groupe de politiques de chiffrement, et chiffrer chaque paquet dans le premier trafic reçu ;
manière 2 : lors de la réception d'un paquet dans le premier trafic, sélectionner de manière aléatoire, par le premier dispositif réseau (700 ; 800 ; 900 ; 1000), une politique de chiffrement à partir du premier groupe de politiques de chiffrement, et chiffrer le paquet reçu ; et
manière 3 : chiffrer, par le premier dispositif réseau (700 ; 800 ; 900 ; 1000), N paquets dans le premier trafic en utilisant la première politique de chiffrement, et chiffrer P paquets dans le premier trafic en utilisant la seconde politique de chiffrement, dans lequel les N paquets comprennent le premier paquet, les P paquets comprennent le deuxième paquet, et N et P sont des nombres entiers positifs.

3. Procédé selon la revendication 1 ou 2, dans lequel, en fonction de la relation de mappage entre le premier trafic et le premier groupe de politiques de chiffrement, le chiffrement, par le premier dispositif réseau (700 ; 800 ; 900 ; 1000), du premier paquet en utilisant une première politique de chiffrement pour obtenir un troisième paquet, et le chiffrement du deuxième paquet en utilisant une seconde politique de chiffrement pour obtenir un quatrième paquet comprend :
le fait de déterminer, par le premier dispositif réseau (700 ; 800 ; 900 ; 1000), une première priorité de chiffrement correspondant au premier paquet, et le fait de déterminer, en fonction d'une relation d'association entre la première priorité de chiffrement et la première politique de chiffrement, de chiffrer le premier paquet en utilisant la première politique de chiffrement pour obtenir le troisième paquet ; et
le fait de déterminer, par le premier dispositif réseau (700 ; 800 ; 900 ; 1000), une seconde priorité de chiffrement correspondant au deuxième paquet, et le fait de déterminer, en fonction d'une relation d'association entre la seconde priorité de chiffrement et la seconde politique de chiffrement, de chiffer le deuxième paquet en utilisant la seconde politique de chiffrement pour obtenir le quatrième paquet.

4. Procédé selon la revendication 3, dans lequel le premier paquet comprend un premier identifiant de priorité de chiffrement, et le premier identifiant de priorité de chiffrement est utilisé pour indiquer la première priorité de chiffrement ; et le deuxième paquet comprend un second identifiant de priorité de chiffrement, et le second identifiant de priorité de chiffrement est utilisé pour indiquer la seconde priorité de chiffrement.

5. Procédé selon l'une quelconque des revendications 1 à 4, dans lequel l'envoi, par le premier dispositif réseau (700 ; 800 ; 900 ; 1000), du troisième paquet et du quatrième paquet vers un second dispositif réseau (700 ; 800 ; 900 ; 1000) comprend :
le fait d'envoyer, par le premier dispositif réseau (700 ; 800 ; 900 ; 1000), le troisième paquet au second dispositif réseau (700 ; 800 ; 900 ; 1000) via un premier chemin, et le fait d'envoyer le quatrième paquet au second dispositif réseau (700 ; 800 ; 900 ; 1000) via un second chemin, dans lequel le premier chemin est associé à la première politique de chiffrement, et le second chemin est associé à la seconde politique de chiffrement.

6. Procédé selon l'une quelconque des revendications 1 à 5, dans lequel le procédé comprend également :
le fait de recevoir, par le premier dispositif réseau (700 ; 800 ; 900 ; 1000), un second trafic, dans lequel le second trafic comprend un cinquième paquet et un sixième paquet, tous les paquets compris dans le second trafic correspondent à une seconde règle de différenciation du trafic, et la première règle de différenciation du trafic est différente de la seconde règle de différenciation du trafic ;
en fonction d'une relation de mappage entre le second trafic et le premier groupe de politiques de chiffrement, le fait de chiffrer, par le premier dispositif réseau (700 ; 800 ; 900 ; 1000), le cinquième paquet et le sixième paquet en utilisant des politiques de chiffrement correspondantes dans le premier groupe de politiques de chiffrement ; et
le fait d'envoyer, par le premier dispositif réseau (700 ; 800 ; 900 ; 1000), un cinquième paquet chiffré et un sixième paquet chiffré au second dispositif réseau (700 ; 800 ; 900 ; 1000).

7. Premier dispositif réseau (900 ; 1000), comprenant :
une mémoire (901 ; 1020) stockant des instructions ; et
un processeur (901 ; 1010) communiquant avec la mémoire (901 ; 1020), dans lequel le processeur (901; 1010) exécute les instructions pour permettre au premier dispositif réseau (700 ; 800 ; 900 ; 1000) d'exécuter le procédé selon l'une quelconque des revendications 1 à 6.

8. Procédé de communication sécurisée, dans lequel le procédé comprend :
le fait de recevoir, par un second dispositif réseau (700 ; 800 ; 900 ; 1000), un troisième paquet et un quatrième paquet provenant d'un premier dispositif réseau (700 ; 800 ; 900 ; 1000) ;
le fait de déchiffrer, par le second dispositif réseau (700 ; 800 ; 900 ; 1000), le troisième paquet en utilisant une première politique de chiffrement correspondant au troisième paquet pour obtenir un premier paquet ; et
le fait de déchiffrer, par le second dispositif réseau (700 ; 800 ; 900 ; 1000), le quatrième paquet en utilisant une seconde politique de chiffrement correspondant au quatrième paquet pour obtenir un deuxième paquet, dans lequel la première politique de chiffrement et la seconde politique de chiffrement correspondent à un premier groupe de politiques de chiffrement, et dans lequel la première politique de chiffrement et la seconde politique de chiffrement sont des politiques de chiffrement différentes ;
**caractérisé par** :
le fait d'envoyer, par le second dispositif réseau (700 ; 800 ; 900 ; 1000), une pluralité de secondes clés publiques du second dispositif réseau (700 ; 800 ; 900 ; 1000) au premier dispositif réseau (700 ; 800 ; 900 ; 1000) afin de permettre au premier dispositif réseau (700 ; 800 ; 900 ; 1000) de créer le premier groupe de politiques de chiffrement en fonction de la pluralité de secondes clés publiques et d'informations de politique associées à chacune de la pluralité de secondes clés publiques, dans lequel les informations de politique comprennent des informations sur le procédé d'échange de clés et des informations sur l'algorithme de chiffrement.

9. Procédé selon la revendication 8, dans lequel le troisième paquet transporte un premier identifiant de politique de chiffrement, et le premier identifiant de politique de chiffrement indique que le troisième paquet est un paquet chiffré en utilisant la première politique de chiffrement.

10. Procédé selon la revendication 8 ou 9, dans lequel le quatrième paquet transporte un second identifiant de politique de chiffrement, et le second identifiant de politique de chiffrement indique que le quatrième paquet est un paquet chiffré en utilisant la seconde politique de chiffrement.

11. Procédé selon l'une quelconque des revendications 8 à 10, dans lequel le second dispositif réseau (700 ; 800 ; 900 ; 1000) détermine, en fonction d'un premier paquet chiffré transporté dans le troisième paquet, de déchiffrer le troisième paquet en utilisant la première politique de chiffrement.

12. Procédé selon l'une quelconque des revendications 8 à 11, dans lequel le second dispositif réseau (700 ; 800 ; 900 ; 1000) détermine, en fonction d'un deuxième paquet chiffré transporté dans le quatrième paquet, de déchiffrer le quatrième paquet en utilisant la seconde politique de chiffrement.

13. Second dispositif réseau (700 ; 800 ; 900 ; 1000), comprenant :
une mémoire (901 ; 1020) stockant des instructions ; et
un processeur (901 ; 1010) communiquant avec la mémoire (901 ; 1020), dans lequel le processeur (901; 1010) exécute les instructions pour permettre au second dispositif réseau (700 ; 800 ; 900 ; 1000) d'exécuter le procédé selon l'une quelconque des revendications 8 à 12.
